# EUROPEAN PATENT APPLICATION

(11) **EP 4 439 043 A1**
(43) Date of publication of application: **02.10.2024**
(21) Application number: 24167846.5
(22) Date of filing: 29.03.2024
(51) Int. Cl.: G01N 15/1429, G01N 15/14, G01N 15/10

(54) **METHODS AND SYSTEMS FOR VISUALIZING SPECTRAL SIGNATURES**

(30) Priority: 30.03.2023 US 202363455749 P
(71) Applicant: Becton, Dickinson and Company, Franklin Lakes, NJ 07417-1880 (US)
(72) Inventor: Mage, Peter, San Jose (US)
(74) Representative: Bals & Vogel Patentanwälte PartGmbB

(57) **Abstract**

Computer implemented-methods of visualizing spectral signatures are provided. Methods of interest include receiving a visualization request for spectral signatures each corresponding to a signal from a fluorochrome of a plurality of fluorochromes that would be measured by a detector of a plurality of detectors, calculating an image value intensity for each spectral signature, and rendering a grid defined by the plurality of fluorochromes on a first axis and the plurality of detectors on a second axis and populated with image values having the calculated intensities to visualize the spectral signatures. Systems and non-transitory computer-readable storage media for carrying out the subject methods are also provided.

## Description

### CROSS-REFERENCE TO RELATED APPLICATION

This application claims priority to the filing date of United States Provisional Patent Application Serial No. 63/455,749 filed on March 30, 2023; the disclosure of which application is incorporated herein by reference.

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Particle analysis (e.g., flow cytometry) is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

The parameters measured using a particle analyzer typically include light at the excitation wavelength scattered by the particle in a narrow angle along a mostly forward direction, referred to as forward-scatter (FSC), the excitation light that is scattered by the particle in an orthogonal direction to the excitation laser, referred to as side-scatter (SSC), and the light emitted from fluorescent molecules or fluorescent dye. Different cell types can be identified by their light scatter characteristics and fluorescence emissions resulting from labeling various cell proteins or other constituents with fluorescent dye-labeled antibodies or other fluorescent probes. Forward-scattered light, side-scattered light and fluorescent light are detected by photodetectors that are positioned within the particle analyzer.

Where flow cytometry protocols include the detection of fluorescent light, experimental design generally involves the identification of a fluorochrome panel, i.e., a collection of fluorochromes to be used together in a given flow cytometric workflow. The process of fluorochrome panel design is necessary because biological resolution (i.e., the ability to distinguish between different components of interest within or between particles of interest) is directly impacted both by the measurement variance of the "raw" flow cytometry data and by the mathematical process of spectral compensation or unmixing. Both of these factors depend strongly on the choice of fluorochromes in the panel. First, measurement variance (i.e., noise) in flow cytometry arises from a wide range of sources including constant baseline measurement noise in the cytometer's electronics, optical shot noise that varies linearly with signal intensity, and multiplicative measurement noise arising from random fluctuations in the cytometer's lasers and fluidics which varies quadratically with signal intensity. The measurement noise itself depends on the choice of fluorochromes. For example, brighter fluorochromes will induce more shot noise than dim fluorochromes, and dim fluorochromes will have a smaller signal magnitude compared to the constant "noise floor" of the instrument's optics and electronics. Second, raw measurement noise in "detector space" (having a number of dimensions equal to the number of detectors in the instrument) propagates to the final biological data in "compensated space" or "unmixed space" (having a number of dimensions equal to the number of fluorochromes in the sample) through the mathematical process of fluorescence compensation (in conventional cytometers) or spectral unmixing (in full-spectrum cytometers). Variance in "unmixed space" is important because it is the space in which the final biological analysis of interest (e.g., gating, clustering, sorting, marker quantitation, etc.) is performed. This mathematical mapping of noise into biological space depends strongly on the spectral signatures of the fluorochromes themselves. Spectral signatures (also called spectral profiles, spillover values, spectral matrix) generally refer to the normalized signal that would be measured on each detector of a flow cytometer for a given fluorophore. Human visual inspection of the spectral signatures is an important step for designing and troubleshooting a multicolor or spectral flow cytometry experiment.

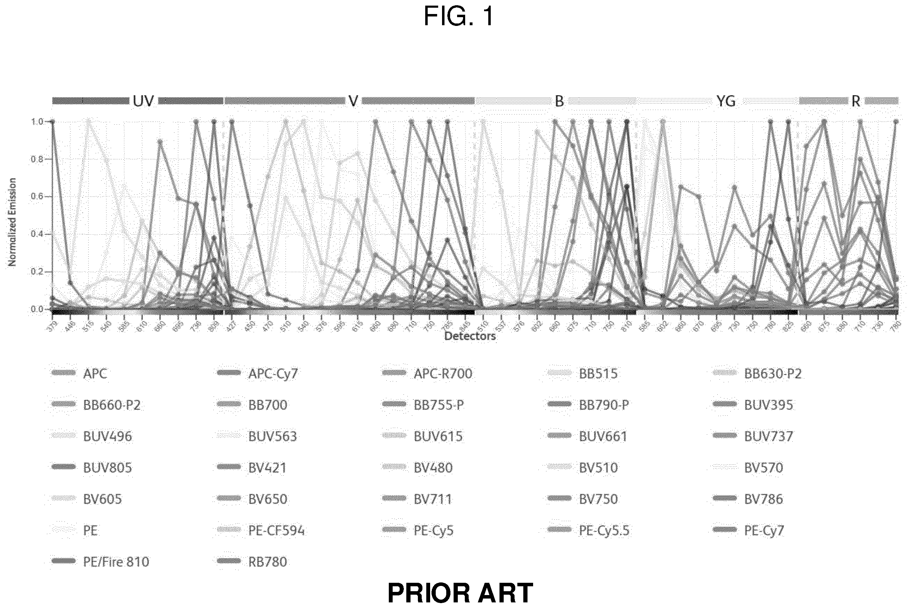

Traditionally, spectral signatures are plotted as a series of line graphs, where the x-axis corresponds to different detectors and the y-axis corresponds to normalized signal intensity (**FIG. 1**). When many overlapping fluorophores are used simultaneously, this traditional line graph is difficult to parse visually - specifically, a user may struggle to identify which fluorochrome a given point on the graph corresponds to, and the overall relationship between dyes is obscured.

### SUMMARY

Aspects of the disclosure include computer-implemented methods of visualizing spectral signatures. Methods of interest include receiving a visualization request for spectral signatures each corresponding to a signal from a fluorochrome of a plurality of fluorochromes that could be measured by a detector of a plurality of detectors, calculating an image value intensity for each spectral signature, and rendering a grid defined by the plurality of fluorochromes on a first axis and the plurality of detectors on a second axis and populated with image values having the calculated intensities to visualize the spectral signatures. In some embodiments, the grid is a heatmap. In certain cases, calculating the image value intensities comprises normalizing the spectral signatures. For example, in some cases, calculating the image value intensities comprises normalizing the spectral signatures to a range (e.g., a range of [0,1]). In other cases, calculating the image value intensities comprises normalizing the spectral signatures to a sum of the spectral signatures associated with each fluorochrome. In still other cases, calculating the image value intensities comprises normalizing the spectral signatures to a two-norm of the spectral signatures associated with each fluorochrome. In still other cases, calculating the image value intensities does not comprise normalizing the spectral signatures.

Methods according to some embodiments also include scaling the image value intensities of the populated grid. In some such embodiments, scaling the image value intensities of the populated grid comprises linearly scaling the image value intensities of the populated grid. In other such cases, scaling the spectral signatures of the populated grid comprises logarithmically scaling the image value intensities of the populated grid. In some implementations, the image value intensities are color image value intensities, such as red-blue-green (RGB) color image value intensities. In some versions, methods include receiving a cell selection from a user indicating a fluorochrome and detector of interest. In some such versions, methods include outputting the image value intensity associated with the cell selection. In certain instances, the cell selection comprises a selection of a row or column of fluorochromes or detectors. In some such instances, methods include outputting a highlighted row or column of the grid corresponding to the cell selection. In certain cases, methods include receiving an instrument identifier. In some such cases, the detectors of the plurality are associated with the instrument identifier. In embodiments, the first axis is a vertical axis (e.g., y-axis) and the second axis is a horizontal axis (e.g., x-axis).

Aspects of the disclosure also include systems configured to perform the subject methods. Systems of interest include memory operably coupled to a processor, wherein the memory comprises instructions stored thereon, which when executed by the processor, cause the processor to perform the methods of the disclosure (e.g., as described above and herein). Systems according to some embodiments may also include a display operably connected to the processor and configured to depict the populated grid. Non-transitory computer-readable storage media having instructions stored thereon for visualizing spectral signatures by a method of the disclosure are also provided.

### BRIEF DESCRIPTION OF THE FIGURES

The disclosure may be best understood from the following detailed description when read in conjunction with the accompanying drawings. Included in the drawings are the following figures:
**FIG. 1** depicts an output of a conventional method for visualizing spectral signatures.
**FIG. 2A-2D** present flow diagrams for practicing methods according to certain embodiments.
**FIG. 3A-3B** depict exemplary graphical user interfaces for receiving a visualization request according to certain embodiments.
**FIG. 4A-4C** presents a heatmap according to certain embodiments.
**FIG. 5** depicts a system according to certain embodiments.
**FIG. 6** presents a block diagram of a computer-controlled system according to certain embodiments.

### DETAILED DESCRIPTION

Computer implemented-methods of visualizing spectral signatures are provided. Methods of interest include receiving a visualization request for spectral signatures each corresponding to a signal from a fluorochrome of a plurality of fluorochromes that could be measured by a detector of a plurality of detectors, calculating an image value intensity for each spectral signature, and rendering a grid defined by the plurality of fluorochromes on a first axis and the plurality of detectors on a second axis and populated with image values having the calculated intensities to visualize the spectral signatures. Systems and non-transitory computer-readable storage media for carrying out the subject methods are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### METHODS of VISUALIZING SPECTRAL SIGNATURES

As discussed above, aspects of the disclosure include methods of visualizing spectral signatures. A "spectral signature" refers to the characteristics of an individual fluorochrome's fluorescent spectrum represented as one or more numerical values. By "visualizing" the spectral signatures, it is meant visually representing the spectral signatures, e.g., in a manner that enables a user to perceive the utility and/or feasibility of using (e.g., in a flow cytometry experiment) one or more fluorochromes in a set of possible fluorochromes relative to one or more other fluorochromes in that same set. In embodiments, methods of the disclosure result in visualized spectral signatures with increased clarity relative to visualized spectral signatures produced by conventional methods, such as the line graphs described above with respect to **FIG. 1****.** In particular, aspects of the disclosure may be used to indicate areas of spectral overlap between fluorochromes, e.g., by comparing the intensity of heatmap cells in a column corresponding to one detector. Methods, systems and computer readable media of the disclosure may also be used to indicate the spectral shape of a fluorochrome's emission and excitation thereby revealing meaningful features such as unexpected cross-laser excitation, e.g., by examining a row corresponding to a fluorochrome.

Methods of the disclosure include receiving a visualization request for spectral signatures. As discussed herein, a "visualization request" is information or data associated with a particular set of spectral signatures that are themselves associated with a particular set of fluorochromes and detectors. The information of the visualization request may be provided (e.g., by a user) with the intention of receiving a visualization of the spectral signatures of the fluorochromes associated with the visualization request. The request may include a string of one or more characters (e.g., alphanumeric characters), symbols, images or other graphical representation(s) associated with the spectral signatures and related fluorochromes. In some instances, the request is or comprises a "shorthand" designation of the spectral signatures as well as their related fluorochromes and detectors-sometimes referred to herein as "fluorochrome identifiers" and "detector identifiers". The request may also include descriptive information, such as chemical structure or reactivity.

Spectral signatures for use in the subject methods may be received in any suitable form. In some cases, spectral signatures are present in a spectral matrix. As described herein, a "spectral matrix" refers to a matrix containing information about the spectral properties of a set of fluorochromes. In embodiments, spectral matrices of interest include a set of spectral signatures associated with each fluorochrome identifier in a set of fluorochrome identifiers. In some embodiments, the spectral signatures are received from experimental data (i.e., the results of an experiment carried out on a particular instrument). In other cases, the spectral signatures are received from simulated data. The input spectral matrix may be associated with any suitable number of fluorochrome identifiers. In some embodiments, the number of fluorochrome identifiers in the input spectral matrix ranges from 2 to 150, such as 2 to 140, such as 2 to 130, such as 2 to 120, such as 2 to 110, such as 2 to 100, such as 2 to 90, such as 2 to 80, such as 2 to 70, such as 2 to 60, and including 2 to 50. The collection of fluorochrome identifiers employed in a given embodiment of the disclosure may be referred to as a fluorochrome palette, which collectively refers to the fluorochrome identifiers from which a given fluorochrome panel may be chosen.

In certain instances, the spectral signatures include one or more spillover values. By "spillover value", it is meant a relative amount of signal that a given fluorochrome emits into each detector band. In certain cases, spillover values are normalized to the detector with maximum signal (i.e., the "peak" detector) for that fluorochrome. In some cases, particle-modulated light indicative of a particular fluorochrome is received by one or more detectors in a particle analyzer (e.g., flow cytometer) that are not the peak detector(s) for that fluorochrome. As such, light may "spill-over" and be detected by off-peak detectors. In other words, the particular fluorescent labels used for an experiment and their associated fluorescent emission bands may be selected to generally coincide with certain detectors. However, as more detectors are provided, and more labels are utilized, perfect correspondence between certain detectors and fluorescent emission spectra may not be possible. It is generally true that although the peak of the emission spectra of a particular fluorescent molecule may lie within the window of one particular detector, some of the emission spectra of that label will also overlap the windows of one or more other detectors. This may be referred to as spillover.

In some embodiments, the spectral matrix described herein may include one or more autofluorescence spectral signatures. Autofluorescence is the intrinsic fluorescent signal generated by particles such as cells when measured in a flow cytometer. It arises from fluorescently active endogenous molecules such as metabolites in cells. Different cells of the same type (e.g., lymphocytes) may have the same autofluorescence spectrum but at different intensities, e.g., larger cells typically tend to have a larger autofluorescence signal. In certain instances, particles of different types are associated with different autofluorescence spectra. For example, cells of different types (e.g., lymphocytes vs. monocytes) may not only have varying levels of autofluorescence, but may also have different autofluorescence spectra (e.g., the spectral signature of lymphocyte autofluorescence may be distinct from the spectral signature of monocyte autofluorescence). In some cases, such as in spectral cytometry, the spectral signature of autofluorescence is measured by looking at unstained cells, and it is included in the spectral unmixing process as an additional "fluorochrome" parameter or parameters, if multiple autofluorescence spectra are included.

In some embodiments, methods include receiving a fluorochrome panel. As discussed herein, a "fluorochrome panel" refers to a set of different fluorescent molecular substances (i.e., dyes) that may be used to identify particles in a sample or particular moieties or components associated therewith. The "fluorochrome panel" discussed herein may also refer to a set of identifiers (e.g., digital identifiers) that uniquely refer to and are associated with particular fluorescent molecular substances. Such identifiers may be referred to herein as "fluorochrome identifiers". Distinct fluorochromes within the fluorochrome panel may differ with respect to properties such as absorption spectra, extinction coefficients, emission spectra, and quantum efficiency (i.e., the number of photons emitted for every photon absorbed), or combinations thereof. As such, different or distinct fluorochromes may differ from each other in terms of chemical composition and/or in terms of one or more properties of the dyes. For example, a given pair of fluorochromes may be considered distinct if they differ from each other in terms of excitation and/or emission maximum, where the magnitude of such difference is, in some instances, 5 nm or more, such 10 nm or more, including 15 nm or more, wherein in some instances the magnitude of the difference ranges from 5 to 400 nm, such as 10 to 200 nm, including 15 to 100 nm, such as 25 to 50 nm.

The subject fluorochrome panels may include any suitable set of fluorochromes. Fluorochromes of interest according to certain embodiments have excitation maxima that range from 100 nm to 800 nm, such as from 150 nm to 750 nm, such as from 200 nm to 700 nm, such as from 250 nm to 650 nm, such as from 300 nm to 600 nm and including from 400 nm to 500 nm. Fluorochromes of interest according to certain embodiments have emission maxima that range from 400 nm to 1000 nm, such as from 450 nm to 950 nm, such as from 500 nm to 900 nm, such as from 550 nm to 850 nm and including from 600 nm to 800 nm. In certain instances, the fluorochrome is a light emitting dye such as a fluorescent dye having a peak emission wavelength of 200 nm or more, such as 250 nm or more, such as 300 nm or more, such as 350 nm or more, such as 400 nm or more, such as 450 nm or more, such as 500 nm or more, such as 550 nm or more, such as 600 nm or more, such as 650 nm or more, such as 700 nm or more, such as 750 nm or more, such as 800 nm or more, such as 850 nm or more, such as 900 nm or more, such as 950 nm or more, such as 1000 nm or more and including 1050 nm or more. For example, the fluorochrome may be a fluorescent dye having a peak emission wavelength that ranges from 200 nm to 1200 nm, such as from 300 nm to 1100 nm, such as from 400 nm to 1000 nm, such as from 500 nm to 900 nm and including a fluorescent dye having a peak emission wavelength of from 600 nm to 800 nm.

Fluorochromes of interest may include, but are not limited to, a bodipy dye, a coumarin dye, a rhodamine dye, an acridine dye, an anthraquinone dye, an arylmethane dye, a diarylmethane dye, a chlorophyll containing dye, a triarylmethane dye, an azo dye, a diazonium dye, a nitro dye, a nitroso dye, a phthalocyanine dye, a cyanine dye, an asymmetric cyanine dye, a quinon-imine dye, an azine dye, an eurhodin dye, a safranin dye, an indamin, an indophenol dye, a fluorine dye, an oxazine dye, an oxazone dye, a thiazine dye, a thiazole dye, a xanthene dye, a fluorene dye, a pyronin dye, a fluorine dye, a rhodamine dye, a phenanthridine dye, squaraines, bodipys, squarine roxitanes, naphthalenes, coumarins, oxadiazoles, anthracenes, pyrenes, acridines, arylmethines, or tetrapyrroles and a combination thereof. In certain embodiments, conjugates may include two or more dyes, such as two or more dyes selected from a bodipy dye, a coumarin dye, a rhodamine dye, an acridine dye, an anthraquinone dye, an arylmethane dye, a diarylmethane dye, a chlorophyll containing dye, a triarylmethane dye, an azo dye, a diazonium dye, a nitro dye, a nitroso dye, a phthalocyanine dye, a cyanine dye, an asymmetric cyanine dye, a quinon-imine dye, an azine dye, an eurhodin dye, a safranin dye, an indamin, an indophenol dye, a fluorine dye, an oxazine dye, an oxazone dye, a thiazine dye, a thiazole dye, a xanthene dye, a fluorene dye, a pyronin dye, a fluorine dye, a rhodamine dye, a phenanthridine dye, squaraines, bodipys, squarine roxitanes, naphthalenes, coumarins, oxadiazoles, anthracenes, pyrenes, acridines, arylmethines, or tetrapyrroles and a combination thereof.

In certain embodiments, fluorochromes of interest may include but are not limited to fluorescein isothiocyanate (FITC), a phycoerythrin (PE) dye, a peridinin chlorophyll protein-cyanine dye (e.g., PerCP-Cy5.5), a phycoerythrin-cyanine (PE-Cy) dye (PE-Cy7), an allophycocyanin (APC) dye (e.g., APC-R700), an allophycocyanin-cyanine dye (e.g., APC-Cy7), a coumarin dye (e.g., V450 or V500). In certain instances, fluorochromes may include one or more of 1,4-bis-(o-methylstyryl)-benzene (bis-MSB 1,4-bis[2-(2-methylphenyl)ethenyl]-benzene), a C510 dye, a C6 dye, nile red dye, a T614 dye (e.g., N-[7-(methanesulfonamido)-4-oxo-6-phenoxychromen-3-yl]formamide), LDS 821 dye ((2-(6-(p-dimethylaminophenyl)-2,4-neopentylene-1,3,5-hexatrienyl)-3-ethylbenzothiazolium perchlorate), an mFluor dye (e.g., an mFluor Red dye such as mFluor 780NS).

Fluorochromes of interest may include, but are not limited to, Fluorescein, Hydroxycoumarin, Aminocoumarin, Methoxycoumarin, Cascade Blue, Pacific Blue, Pacific Orange, Lucifer yellow, NBD, R-Phycoerythrin (PE), PE-Cy5 conjugates, PE-Cy7 conjugates, Red 613, PerCP, TruRed, FluorX, BODIPY-FL, TRITC, X-Rhodamine, Lissamine Rhodamine B, Texas Red, Allophycocyanin (APC), APC-Cy7 conjugates, Cy2, Cy3, Cy3B, Cy3.5, Cy5, Cy5.5, Cy7, Hoechst 33342, DAPI, Hoechst 33258, SYTOX Blue, Chromomycin A3, Mithramycin, YOYO-1, Ethidium Bromide, Acridine Orange, SYTOX Green, TOTO-1, TO-PRO-1, Thiazole Orange, Propidium Iodide (PI), LDS 751, 7-AAD, SYTOX Orange, TOTO-3, TO-PRO-3, DRAQ5, Indo-1, Fluo-3, DCFH, DHR, SNARF, Y66H, Y66F, EBFP, EBFP2, Azurite, GFPuv, T-Sapphire, TagBFP, Cerulean, mCFP, ECFP, CyPet, Y66W, dKeima-Red, mKeima-Red, TagCFP, AmCyan1, mTFP1 (Teal), S65A, Midoriishi-Cyan, Wild Type GFP, S65C, TurboGFP, TagGFP, TagGFP2, AcGFP1, S65L, Emerald, S65T, EGFP, Azami-Green, ZsGreen1, Dronpa-Green, TagYFP, EYFP, Topaz, Venus, mCitrine, YPet, TurboYFP, PhiYFP, PhiYFP-m, ZsYellow1, mBanana, Kusabira-Orange, mOrange, mOrange2, mKO, TurboRFP, tdTomato, DsRed-Express2, TagRFP, DsRed monomer, DsRed2 ("RFP"), mStrawberry, TurboFP602, AsRed2, mRFP1, J-Red, mCherry, HcRed1, mKate2, Katushka (TurboFP635), mKate (TagFP635), TurboFP635, mPlum, mRaspberry, mNeptune, E2-Crimson, Monochlorobimane, Calcein, Alexa Fluor 350, Alexa Fluor 405, Alexa Fluor 430, Alexa Fluor 488, Alexa Fluor 500, Alexa Fluor 514, Alexa Fluor 532, Alexa Fluor 546, Alexa Fluor 555, Alexa Fluor 568, Alexa Fluor 594, Alexa Fluor 610, Alexa Fluor 633, Alexa Fluor 647, Alexa Fluor 660, Alexa Fluor 680, Alexa Fluor 700, Alexa Fluor 750, Alexa Fluor 790, and HyPer, or the like. In some embodiments, the fluorochromes are selected from: 7-AAD, Alexa Fluor 488, Alexa Fluor 647, Alexa Fluor 700, AmCyan, APC, APC-Cy7, APC-H7, APC-R700, BB660-P2, BB790-P, BUV395, BUV615, BUV661, BV570, BV605, BV650, BV711, BV750, BV786, BYG584-P, Calcein AM, Calcein Blue AM, CFSE, DAPI, DRAQ5, DRAQ7, FITC, Fluo-4 AM, FVS440UV, FVS450, FVS510, FVS520, FVS570, FVS575V, FVS620, FVS660, FVS700, FVS780, Indo-1 Hi, Indo-1 Lo, JC-1, MitoStatus Red, MitoStatus TMRE, Pacific Blue, PE, PE-CF594, PE-Cy5, PE-Cy7, PerCP, PerCP-Cy5.5, PI, R718, RB545, RB613, RB744, RB780, RY586, RY610, V450, V500, Via-Probe Green, Via-Probe Red, VPD450, Alexa Fluor 532, Alexa Fluor 561, Alexa Fluor 660, APC-eFluor 780, APC/Fire 750, APC/Fire 810, BV785, eBFP, eCFP, eFluor 450, eFluor 506, eFluor 660, eGFP, eYFP, Hoechst 33258, KIRAVIA Blue 520, mCherry, NFB510, NFB530, NFB555, NFB585, NFB610-70S, NFB660-120S, NFR660, NFR685, NFR700, NFR710, NFY570, NFY590, NFY610, NFY660, NFY690, NFY700, NFY730, Pacific Orange, PE-Cy5.5, PE-eFluor 610, PE/Dazzle 594, PE/Fire 640, PE/Fire 700, PE/Fire 810, PerCP-eFluor 710, SB436, SB600, SB645, SB702, SB780, Spark Blue 550, Spark Blue 574, Spark NIR 685, Spark UV 387, Spark Violet 423, Spark Violet 538, Spark YG 581, Spark YG 593, and tdTomato.

In some instances, the fluorochrome panel includes one or more polymeric dyes (e.g., fluorescent polymeric dyes). Fluorescent polymeric dyes that find use in the subject methods and systems are varied. In some instances of the method, the polymeric dye includes a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where π-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain. In some instances, the polymeric dye includes a CP that has a rigid rod structure. The structural characteristics of the polymeric dyes can have an effect on the fluorescence properties of the molecules.

Any convenient polymeric dye may be utilized in the subject devices and methods. In some instances, a polymeric dye is a multichromophore that has a structure capable of harvesting light to amplify the fluorescent output of a fluorophore. In some instances, the polymeric dye is capable of harvesting light and efficiently converting it to emitted light at a longer wavelength. In some cases, the polymeric dye has a light-harvesting multichromophore system that can efficiently transfer energy to nearby luminescent species (e.g., a "signaling chromophore"). Mechanisms for energy transfer include, for example, resonant energy transfer (e.g., Forster (or fluorescence) resonance energy transfer, FRET), quantum charge exchange (Dexter energy transfer), and the like. In some instances, these energy transfer mechanisms are relatively short range; that is, close proximity of the light harvesting multichromophore system to the signaling chromophore provides for efficient energy transfer. Under conditions for efficient energy transfer, amplification of the emission from the signaling chromophore occurs when the number of individual chromophores in the light harvesting multichromophore system is large; that is, the emission from the signaling chromophore is more intense when the incident light (the "excitation light") is at a wavelength which is absorbed by the light harvesting multichromophore system than when the signaling chromophore is directly excited by the pump light.

The multichromophore may be a conjugated polymer. Conjugated polymers (CPs) are characterized by a delocalized electronic structure and can be used as highly responsive optical reporters for chemical and biological targets. Because the effective conjugation length is substantially shorter than the length of the polymer chain, the backbone contains a large number of conjugated segments in close proximity. Thus, conjugated polymers are efficient for light harvesting and enable optical amplification via Forster energy transfer.

Polymeric dyes of interest include, but are not limited to, those dyes described in U.S. Patent Nos. 7,270,956; 7,629,448; 8,158,444; 8,227,187; 8,455,613; 8,575,303; 8,802,450; 8,969,509; 9,139,869; 9,371,559; 9,547,008; 10,094,838; 10,302,648; 10,458,989; 10,641,775 and 10,962,546 the disclosures of which are herein incorporated by reference in their entirety; and Gaylord et al., J. Am. Chem. Soc., 2001, 123 (26), pp 6417-6418; Feng etal., Chem. Soc. Rev., 2010,39, 2411-2419; and Traina et al., J. Am. Chem. Soc., 2011, 133 (32), pp 12600-12607, the disclosures of which are herein incorporated by reference in their entirety. Specific polymeric dyes that may be employed include, but are not limited to, BD Horizon Brilliant^{™} Dyes, such as BD Horizon Brilliant^{™} Violet Dyes (e.g., BV421, BV510, BV605, BV650, BV711, BV786); BD Horizon Brilliant^{™} Ultraviolet Dyes (e.g., BUV395, BUV496, BUV737, BUV805); and BD Horizon Brilliant^{™} Blue Dyes (e.g., BB515) (BD Biosciences, San Jose, CA). Any fluorochromes that are known to a skilled artisan-including, but not limited to, those described above-or are yet to be discovered may be employed in the subject methods.

Fluorochromes in the subject fluorochrome panels and/or fluorochromes referenced in the spectral matrix may or may not be coupled to a biomolecule, such as a biological macromolecule. The biological macromolecule may be a biopolymer. A "biopolymer" is a polymer of one or more types of repeating units. Biopolymers are typically found in biological systems and particularly include polysaccharides (such as carbohydrates), and peptides (which term is used to include polypeptides, and proteins whether or not attached to a polysaccharide) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. Specifically, a "biopolymer" includes DNA (including cDNA), RNA and oligonucleotides, regardless of the source. As such, biomolecules may include polysaccharides, nucleic acids and polypeptides. For example, the nucleic acid may be an oligonucleotide, truncated or full-length DNA or RNA. In embodiments, oligonucleotides, truncated and full-length DNA or RNA are comprised of 10 nucleotide monomers or more, such as 15 or more, such as 25 or more, such as 50 or more, such as 100 or more, such as 250 or more and including 500 nucleotide monomers or more. For example, oligonucleotides, truncated and full-length DNA or RNA of interest may range in length from 10 nucleotides to 10⁸ nucleotides, such as from 10² nucleotides to 10⁷ nucleotides, including from 10³ nucleotides to 10⁶ nucleotides. In embodiments, biopolymers are not single nucleotides or short chain oligonucleotides (e.g., less than 10 nucleotides). By "full length" is meant that the DNA or RNA is a nucleic acid polymer having 70% or more of its complete sequence (such as found in nature), such as 75% or more, such as 80% or more, such as 85% or more, such as 90% or more, such as 95% or more, such as 97% or more, such as 99% or more and including 100% of the full length sequence of the DNA or RNA (such as found in nature)

Polypeptides may be, in certain instances, truncated or full-length proteins, enzymes or antibodies. In embodiments, polypeptides, truncated and full-length proteins, enzymes or antibodies are comprised of 10 amino acid monomers or more, such as 15 or more, such as 25 or more, such as 50 or more, such as 100 or more, such as 250 or more and including 500 amino acid monomers or more. For example, polypeptides, truncated and full-length proteins, enzymes or antibodies of interest may range in length from 10 amino acids to 10⁸ amino acids, such as from 10² amino acids to 10⁷ amino acids, including from 10³ amino acids to 10⁶ amino acids. In embodiments, biopolymers are not single amino acids or short chain polypeptides (e.g., less than 10 amino acids). By "full length" is meant that the protein, enzyme or antibody is a polypeptide polymer having 70% or more of its complete sequence (such as found in nature), such as 75% or more, such as 80% or more, such as 85% or more, such as 90% or more, such as 95% or more, such as 97% or more, such as 99% or more and including 100% of the full length sequence of the protein, enzyme or antibody (such as found in nature).

In some instances, the fluorochrome is conjugated to a specific binding member. The specific binding member and the fluorochrome can be conjugated (e.g., covalently linked) to each other at any convenient locations of the two molecules, via an optional linker. As used herein, the term "specific binding member" refers to one member of a pair of molecules which have binding specificity for one another. One member of the pair of molecules may have an area on its surface, or a cavity, which specifically binds to an area on the surface of, or a cavity in, the other member of the pair of molecules. Thus, the members of the pair have the property of binding specifically to each other to produce a binding complex. In some embodiments, the affinity between specific binding members in a binding complex is characterized by a K_{d} (dissociation constant) of 10⁻⁶ M or less, such as 10⁻⁷ M or less, including 10⁻⁸ M or less, e.g., 10⁻⁹ M or less, 10⁻¹⁰ M or less, 10⁻¹¹ M or less, 10⁻¹² M or less, 10⁻¹³ M or less, 10⁻¹⁴ M or less, including 10⁻¹⁵ M or less. In some embodiments, the specific binding members specifically bind with high avidity. By high avidity is meant that the binding member specifically binds with an apparent affinity characterized by an apparent K_{d} of 10 × 10⁻⁹ M or less, such as 1× 10⁻⁹ M or less, 3 × 10⁻¹⁰ M or less, 1 × 10⁻¹⁰ M or less, 3 × 10⁻¹¹ M or less, 1 × 10⁻¹¹ M or less, 3 × 10⁻¹² M or less or 1 × 10⁻¹² M or less.

The specific binding member can be proteinaceous. As used herein, the term "proteinaceous" refers to a moiety that is composed of amino acid residues. A proteinaceous moiety can be a polypeptide. In certain cases, the proteinaceous specific binding member is an antibody. In certain embodiments, the proteinaceous specific binding member is an antibody fragment, e.g., a binding fragment of an antibody that specific binds to a polymeric dye. As used herein, the terms "antibody" and "antibody molecule" are used interchangeably and refer to a protein consisting of one or more polypeptides substantially encoded by all or part of the recognized immunoglobulin genes. The recognized immunoglobulin genes, for example in humans, include the kappa (k), lambda (l), and heavy chain genetic loci, which together comprise the myriad variable region genes, and the constant region genes mu (u), delta (d), gamma (g), sigma (e), and alpha (a) which encode the IgM, IgD, IgG, IgE, and IgA isotypes respectively. An immunoglobulin light or heavy chain variable region consists of a "framework" region (FR) interrupted by three hypervariable regions, also called "complementarity determining regions" or "CDRs". The extent of the framework region and CDRs have been precisely defined (see, "Sequences of Proteins of Immunological Interest," E. Kabat et al., U.S. Department of Health and Human Services, (1991)). The numbering of all antibody amino acid sequences discussed herein conforms to the Kabat system. The sequences of the framework regions of different light or heavy chains are relatively conserved within a species. The framework region of an antibody, that is the combined framework regions of the constituent light and heavy chains, serves to position and align the CDRs. The CDRs are primarily responsible for binding to an epitope of an antigen. The term antibody is meant to include full length antibodies and may refer to a natural antibody from any organism, an engineered antibody, or an antibody generated recombinantly for experimental, therapeutic, or other purposes as further defined below. Antibody fragments of interest include, but are not limited to, Fab, Fab', F(ab')2, Fv, scFv, or other antigen-binding subsequences of antibodies, either produced by the modification of whole antibodies or those synthesized de novo using recombinant DNA technologies. Antibodies may be monoclonal or polyclonal and may have other specific activities on cells (e.g., antagonists, agonists, neutralizing, inhibitory, or stimulatory antibodies). It is understood that the antibodies may have additional conservative amino acid substitutions which have substantially no effect on antigen binding or other antibody functions. In certain embodiments, the specific binding member is a Fab fragment, a F(ab')₂ fragment, a scFv, a diabody or a triabody. In certain embodiments, the specific binding member is an antibody. In some cases, the specific binding member is a murine antibody or binding fragment thereof. In certain instances, the specific binding member is a recombinant antibody or binding fragment thereof.

The spectral signatures associated with the visualization request each correspond to a signal from a fluorochrome of a plurality of fluorochromes that could be measured by a detector of a plurality of detectors. In other words, the spectral signatures can be used to predict the amount signals received by a detector from certain fluorochromes would hypothetically overlap if used together in an experiment. Put another way, the visualization request also includes information in an appropriate format regarding the detectors on which the signals would be obtained. The detectors referenced in the visualization request may be any suitable detector. The detectors of the plurality may vary as desired, e.g., depending on the requirements of a given protocol or experiment. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, detectors of interest are configured to collect spectra of light over a range of wavelengths. The detectors may be configured to collect spectra of light over one or more of the wavelength ranges of 200 nm to 1000 nm, such as 400 nm to 900 nm. In yet other embodiments, detectors of interest are configured to measure light emitted by a sample in the flow stream at one or more specific wavelengths. For example, detectors are configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In some cases, the detectors are configured to measure light at one or more of 379 nm, 427 nm, 446 nm, 450 nm, 470 nm, 510 nm, 515 nm, 537 nm, 540 nm, 576 nm, 585 nm, 595 nm, 602 nm, 610 nm, 615 nm, 660 nm, 670 nm, 675 nm, 680 nm, 695 nm, 710 nm, 730 nm, 736 nm, 750 nm, 780 nm, 785 nm, 809 nm, 810 nm, 825 nm, and 845 nm.

Methods of the disclosure may in some embodiments also include receiving an instrument identifier. By "instrument identifier" it is meant information or data that refers to a particular instrument (e.g., particle analyzer, flow cytometer). In certain cases, the instrument identified via the instrument identifier is a flow cytometer. Any convenient flow cytometer configured to analyze fluorescent particle-modulated light may be employed. In certain instances, flow cytometers of interest include those produced by BD Biosciences. Exemplary flow cytometers include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter or the like.

In some cases, the detectors associated with the visualization request are associated with the instrument identifier. In other words, since a given type of instrument (e.g., those described above) generally has known number and configuration of detectors, methods according to some embodiments of the disclosure include receiving an instrument identifier as part of the visualization request with the understanding that said instrument identifier corresponds to a certain set of detectors which is then used to generate the visualization. Put another way, a user may input the fluorochromes and/or spectral signatures associated therewith as well as the instrument identifier.

The visualization request as well as its component parts (e.g., fluorochromes and/or the spectral signatures associated therewith, detectors, instrument identifier) may be received/input in any suitable manner. In some cases, the visualization request is received/input using a graphical user interface (GUI). In some cases, the graphical user interface may display a list of fluorochromes and/or the spectral signatures associated therewith, detectors and/or instrument identifiers. In other cases, the GUI is comprised of drop-down menus for each component. In further cases, the visualization request is provided by inputting information into appropriate text fields. In still further cases, the visualization request is provided by selecting check boxes. In yet further cases, the GUI is configured receive the visualization request via a combination of methods. For example, in certain versions, the fluorochromes are selected via check boxes while an instrument identifier is selected via a drop-down menu.

In certain embodiments, methods include the use of a search engine for searching for, adding or modifying visualization requests and for responding to user queries (e.g., inputted into the graphical user interface locally or from a remote location over the internet or local area network). In some instances, each persistent object in the system memory has an associated table in a system database and object attributes are mapped to table columns. In a further aspect, each object has an object relational mapping file which binds that object to the table in the database. Objects are also associated with each other and this association is mapped as the relation between the tables. Objects are also associated with each other by many different relationships, such as one-to-one, one-to-many, many-to-one and many-to-many. Search criteria provided in user queries may include descriptions of attributes or properties associated with an object or by values corresponding to those attributes. Relationships may also be used as search criteria. Basic search criteria can depend upon an object's attributes and advanced search criteria can depend upon association of the object with other objects, e.g., by searching properties of related objects. In certain embodiments, search engines of interest include a finder framework, which will construct a plurality of searchable conditions (e.g., all possible queryable conditions). When a user specifies an entity or object to search for, the framework generates all possible search conditions for that object and then gives the result as per the conditions selected by the user.

Using the search engine, a user of the system can search for available fluorochromes and detectors. In certain embodiments, the search engine can build queries, save queries, modify queries, and/or update queries used to generate a visualization request. In some instances, the search results can be shared, compared or modified. In certain instances, systems are configured to set a maximum of search results that fit a search criteria to be displayed on the graphical user interface. In some embodiments, search results are displayed on a Webpage which includes capabilities for allowing possible actions. Such capabilities can include, but are not limited to, links, buttons, drop down menus, fields for receiving information from a user, and the like. In certain aspects, the system further includes a result formatter for formatting search results (e.g., to build appropriate user interfaces such as Web pages, to specify links, provide a way to associate actions (e.g., "delete," "edit," etc.) with images, text, hyperlinks and/or other displays.

The system may also display the search criteria for an object under search on the web page. In one aspect, the system takes input data from the finder framework and creates a web page dynamically showing the search criteria for that object. In another aspect, the finder framework creates all possible queryable conditions for the object under search. These conditions are displayed on search web page as different fields. A user can select or specify value(s) for these field(s) and execute a search. The fields that are to be displayed have their labels in localized form. Fields may be in the form of a "select" box, or a text box or other area for inputting text. For example, a user may desire to search for a biomolecule. Biomolecules in the searchable database include queryable conditions such as compound name or sequence number (e.g., accession number).

After the visualization request is received, methods of interest include calculating an image value intensity for each spectral signature. The term "image value" is used in its conventional sense to relative lightness or darkness of a color or shade. Accordingly, an "image value intensity" is a metric for image value that is calculated relative to the spectral signatures described above. The method by which the image value intensities are calculated may vary in some instances depending on the goals of a given experiment. In certain embodiments, calculating the image value intensities comprises normalizing the spectral signatures. In some such cases, calculating the image value intensities comprises normalizing the spectral signatures to a range. In other words, the calculated image value intensities can be restricted to values within a range. Any suitable range may be employed, e.g., [0,1000], such as [0,750], such as [0,500], such as [0,250], such as [0,100], such as [0,50], such as [0,25], such as [0,10], such as [0,5], such as [0,1], and including [0,0.5]. In certain embodiments, calculating the image value intensities comprises normalizing the spectral signatures to a range of [0,1]. In alternative cases, calculating the image value intensities comprises normalizing the spectral signatures to a sum of the spectral signatures associated with each fluorochrome. In other words, the spectral signatures associated with each fluorochrome are summed, and the image value intensities are normalized to that sum. In still other cases, calculating the image value intensities comprises normalizing the spectral signatures to a norm. Suitable norms include, but are not limited to, L² norms, L¹ norms, 1-norms, 2-norms, infinity norms, and Frobenius norms. In some cases, the norm is a L² norm. In some cases, the norm is a 1-norm. In some cases, the norm is a 2-norm. In some cases, the norm is an infinity norm. In some cases, the norm is a Frobenius norm. In some cases, the norm is a vector norm calculated relative to individual spectral signatures alone. In other cases, the norm is a matrix norm calculated relative to the entire spectral matrix. In certain instances, calculating the image value intensities comprises normalizing the spectral signatures to a two-norm of the spectral signatures associated with each fluorochrome. In alternative cases, however, calculating the image value intensities does not comprise normalizing the spectral signatures. In embodiments, spectral signatures are not normalized in where it is desirable to compare brightness of fluorochromes.

In order to compare the shapes of different fluorochromes' spectral signatures and more easily identify their maximum detectors, a user may prefer a normalization of each spectral signature based on the infinity norm (i.e., normalization of each fluorochrome's signature to its max value). This would match how spectral signatures are normalized on most instruments and in most analysis software. A user might choose L1-normalization (normalization to sum) or L2-normalization (normalization to squared sum) in order to compare the extent to which different fluorochromes' spectral signatures are more disperse (spread across many detectors) or more focused (limited to a smaller number of detectors); this is because the L1-norm effectively normalizes each spectral signature to its total area, giving each spectrum the same area in a normalized visualization.

In certain embodiments, calculating the image value intensities comprises taking a nonlinear transform of the spectral signature values. This nonlinear transform may be a logarithm, an inverse hyperbolic sine (arcsinh), a square root, or any other nonlinear transform. The nonlinear transformed image values may be used directly or normalized using any of the methods as described above. In a logarithmic scheme, spectral signature values of zero may be mapped to an image value of 0 because otherwise the logarithm of 0 is undefined. A user may prefer to use a nonlinear image value transform in order to accentuate dimmer parts of the spectral signature, which may help reveal subtle regions of spectral overlap that would be measured in a cytometry application looking at logarithmically scaled data.

Methods of the disclosure also include rendering a grid. The subject grid is comprised of a series of columns and rows, as well as cells at the points where the columns and rows intersect. In some embodiments, the grid may be considered a heatmap. Grids of the present disclosure are defined by the plurality of fluorochromes on a first axis and the plurality of detectors on a second axis. In some cases, the first axis is a vertical axis (e.g., y-axis) and the second axis is a horizontal axis (e.g., x-axis). In other cases, the first axis is a horizontal axis (e.g., x-axis) and the second axis is a vertical axis (e.g., y-axis). The identifiers for the fluorochromes may be arranged on the first axis according to any suitable principle or may instead be randomly arranged. In certain cases, the fluorochrome identifiers are arranged on the first axis by peak emission wavelength. Similarly, identifiers for the detectors may be arranged on the second axis according to any suitable principle or may instead be randomly arranged. In some cases, the detector identifiers are arranged according to detection wavelength, i.e., the wavelength or range of wavelengths of light each detector is configured to collect. In some such cases, detector identifiers are arranged by increasing detection wavelengths. In some versions, the second axis is segmented according to the portion of the electromagnetic spectrum from which a detector is configured to collect light. In other words, detectors configured to collect light from one portion of the electromagnetic spectrum are grouped together, and detectors configured to collect light from another portion of the electromagnetic spectrum are grouped together, and so on. Such may be useful, e.g., when an instrument comprises multiple lasers that emit light having wavelengths or ranges of wavelengths in different portions of the electromagnetic spectrum. If one or more detectors collect light from multiple portions of the electromagnetic spectrum, identifiers of said detectors may be repeated on the second axis, as appropriate. In some embodiments, the second axis is segmented into a ultraviolet (UV) and visible light. In some instances, the category of visible light may be further segmented into its component parts, e.g., one or more of violet (V), blue (B), yellow-green (YG), and red (R).

Grids of the disclosure are populated with image values having the calculated intensities. In other words, a cell at the intersection of a given row and column of the grid is populated by an image value the intensity of which is calculated from the spectral signature associated with the appropriate detector and fluorochrome. The image value intensity in each cell may be represented using any appropriate color scheme. In some embodiments, the image value intensities are greyscale image value intensities. In alternative cases, the image value intensities are color image value intensities. For example, the darkness or lightness of a given color may represent the calculated image value intensities. In some instances, the color image value intensities are red-blue-green (RGB) color image value intensities. In other words, each spectral signature value may be translated to a corresponding RGB value. In some such instances, the use of RGB color image value intensities may be used to create a "perceptual" colormap where the range of RGB values is selected to provide an intuitive sense of changing values based on the spectral response of the human eye.

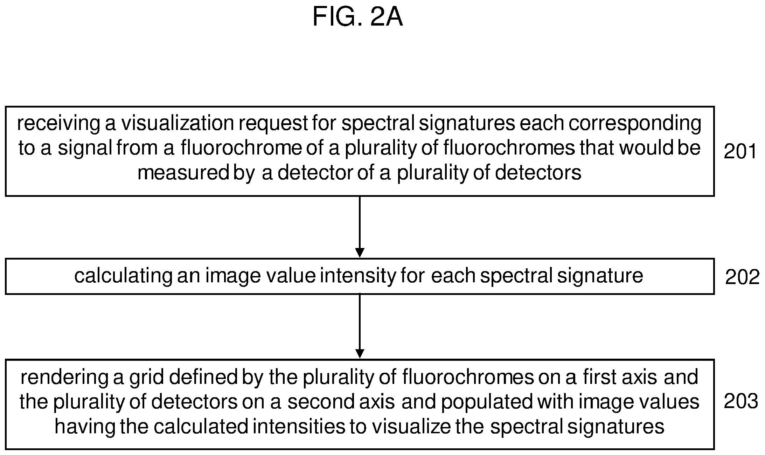

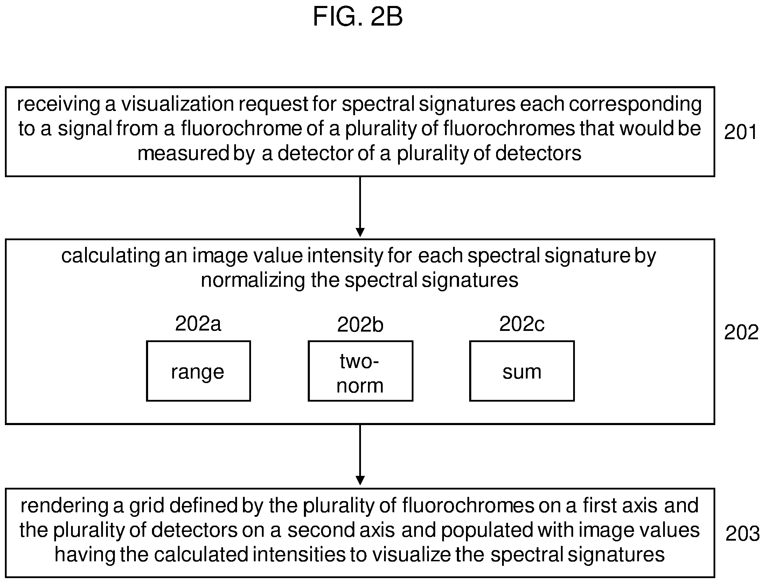

**FIG. 2A** presents a flowchart for practicing a method according to one embodiment of the disclosure. As shown in **FIG. 2A****,** a visualization request for spectral signatures each corresponding to a signal from a fluorochrome of a plurality of fluorochromes that would be measured by a detector of a plurality of detectors is received in step 201. In step 202, an image value intensity is calculated for each spectral signature. Step 203 includes rendering a grid defined by the plurality of fluorochromes on a first axis and the plurality of detectors on a second axis and populated with image values having the calculated intensities to visualize the spectral signatures. **FIG. 2A** may be considered an embodiment of the method in which calculating the image value intensities does not comprise normalizing the spectral signatures, such as where it is desirable to represent fluorochrome brightness. **FIG. 2B** includes the same steps as **FIG. 2A****,** with the addition of normalizing the spectral signatures in step 202. The normalization step can include normalizing the spectral signatures to a range (202a), normalizing the spectral signatures to a two-norm of the spectral signatures associated with each fluorochrome (202b) or normalizing the spectral signatures to a sum of the spectral signatures associated with each fluorochrome (202c).

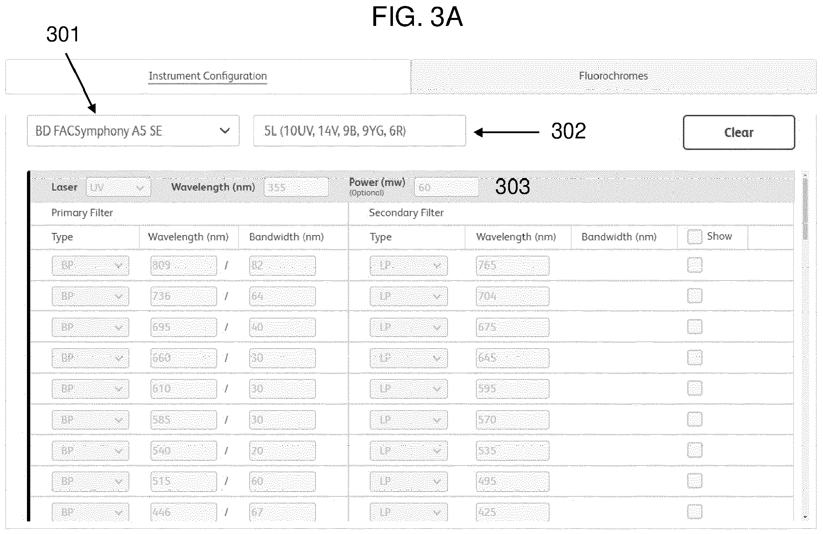

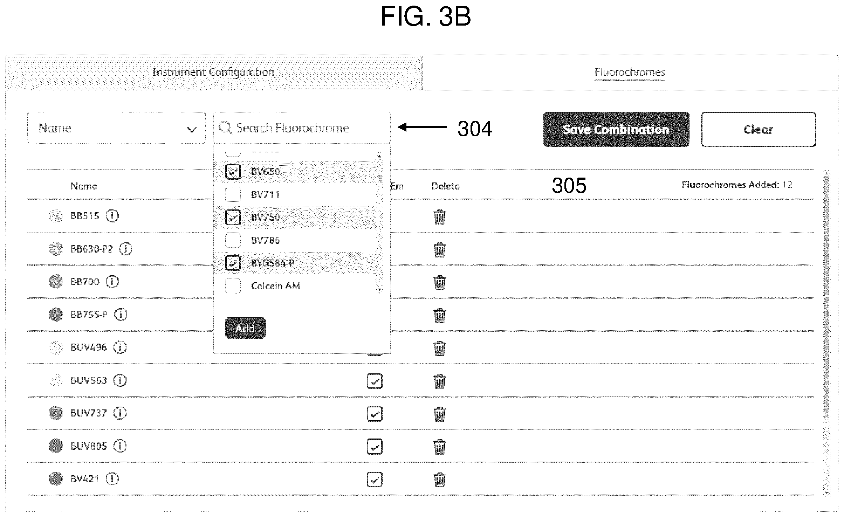

**FIG. 3A-3B** depict exemplary graphical user interfaces for receiving a visualization request according to certain embodiments. **FIG. 3A** depicts a graphical user interface for receiving an instrument identifier. Instrument identifiers may be selected from drop-down menu 301. In the example of **FIG. 3A****,** the selected instrument identifier is "BD FACSymphony A5 SE". Instruments associated with particular instrument identifiers generally have a known configuration of lasers and detectors. As shown in box 302, the BD FACSymphony A5 SE has 5 lasers configured to emit ultraviolet (UV) light, violet (V) light, blue (B) light, yellow-green (YG) light and red (R) light. The instrument has 10 detectors configured to collect UV light, 14 detectors configured to collect V light, 9 detectors configured to collect B light, 9 detectors configured to detect YG light, and 6 detectors configured to collect R light. Table 303 provides specifications of the detectors configured to detect light in each of the segments of the electromagnetic spectrum associated with each of the 5 lasers. For example, table 303 describes the wavelength of light each detector is configured to collect and the types of filters configured to result in this selective detection. In **FIG. 3A****,** a selection of detector configurations within the UV component are shown in table 303, although the existence of similar data for the other portions of the visible light spectrum is implied. **FIG. 3B** presents a graphical user interface for receiving fluorochrome identifiers. As shown in **FIG. 3B****,** a user may select fluorochrome identifiers of interest for a potential fluorochrome panel from drop-down menu 304. Selected fluorochrome identifiers from drop-down menu 304 are added to table 305.

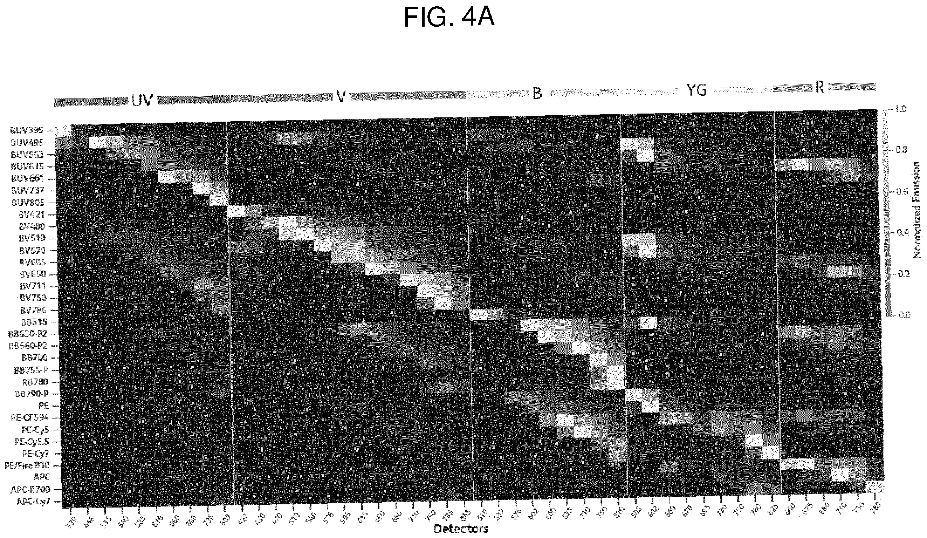

**FIG. 4A** presents an exemplary grid (i.e., heatmap) produced according to embodiments of the disclosure. The spectral signatures of all dyes are clearly visible simultaneously, allowing for easier human interpretation. As shown in **FIG. 4A****,** the first axis comprising fluorochrome identifiers is the y axis, and the second axis comprising detector identifiers is the x-axis. The detector identifiers are segmented according to portions of the electromagnetic spectrum from which detectors are configured to collect light. From left to right, these portions include ultraviolet (UV) light, violet (V) light, blue (B) light, yellow/green (YG) light, and red (R) light. In the example of **FIG. 4A****,** image value intensities are calculated by normalizing spectral signatures to a range of [0,1]. The color of a "cell" (specific rectangle in the grid) corresponds to the normalized intensity of that row's fluorophore in that columns' detector. The heatmap readout facilitates several useful analysis modes for the user. For example, comparing the intensity of heatmap cells in the column corresponding to one detector may indicate areas of spectral overlap between fluorochromes. In contrast, examining the row corresponding to a fluorochrome may clearly indicate the spectral shape of that fluorochrome's emission and excitation, revealing meaningful features such as unexpected cross-laser excitation.

Aspects of the present methods additionally include scaling the image value intensities of the populated grid. Scaling may be performed in some embodiments to improve intelligibility of the image value intensities when they are perceived by a user. In some embodiments, scaling the image value intensities of the populated grid comprises linearly scaling the image value intensities of the populated grid. In other words, the populated grid is scaled so that linear changes in a spectral signature value correspond to linear changes of the "perceived" value of the grid (e.g., heatmap). In other cases, scaling the spectral signatures of the populated grid comprises logarithmically scaling the image value intensities of the populated grid. Put another way, the populated grid is scaled so that logarithmic changes in a spectral signature correspond to linear changes in the "perceived" value of the grid (e.g., heatmap). In certain implementations, logarithmic scaling is employed to reveal low levels of emission and overlap which may be relevant in a fluorochrome panel.

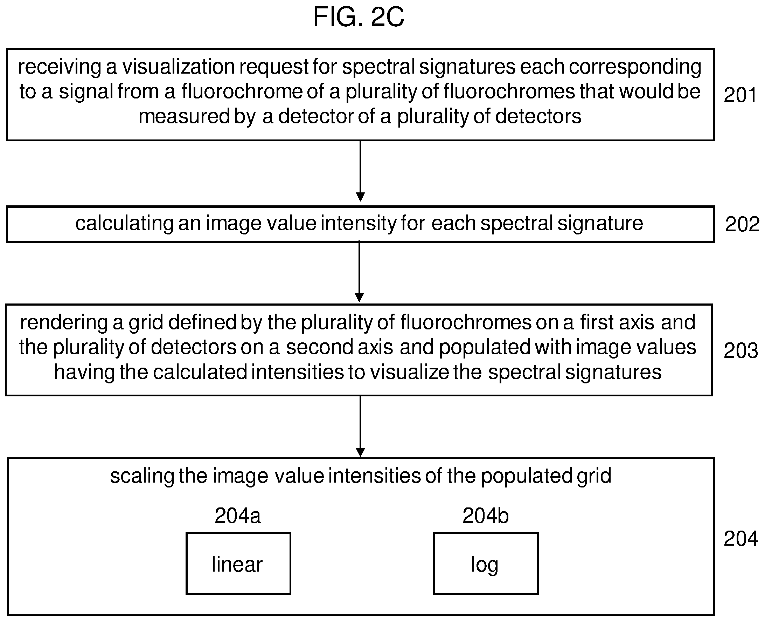

**FIG. 2C** presents a flowchart for practicing a method according to one embodiment of the disclosure. **FIG. 2C** includes the same steps as **FIG. 2A** with the addition of scaling the image value intensities of the populated grid in step 204. This can include linearly scaling the image value intensities of the populated grid (204a) or logarithmically scaling the image value intensities of the populated grid (204b). Although such is not depicted, step 202 of **FIG. 2C** may or may not involve the normalizing shown in **FIG. 2B****.**

Methods according to some embodiments of the disclosure include outputting the rendered grid to a user. Such can include, e.g., outputting the rendered grid onto an electronic display. In addition or alternatively, methods include printing the rendered grid, e.g., using a printer. The rendered grid may subsequently be employed by the user, e.g., in the process of selecting a fluorochrome panel for a particular experiment.

Methods according to some embodiments also include receiving a cell selection from a user. By "cell selection" it is meant a portion of the grid (e.g., heatmap) indicating one or more fluorochromes and detectors of interest to the user that may be the subject of further investigation and/or analysis. For example, a user may make a cell selection if it is desirable to obtain a readout of the spectral signature and/or image value intensity associated with a particular fluorochrome-detector pair or plurality of such pairs. In some embodiments in which the cell selection is for a particular fluorochrome-detector pair, methods may include outputting the image value intensity associated with the cell selection. Alternatively or in addition, methods may include highlighting the cell associated with the cell selection, such as by enlarging it or otherwise altering its depiction relative to neighboring cells in such a manner that a user may inspect its image value. In other cases, a plurality of the values for a particular fluorochrome or detector may be of interest. In such cases, the cell selection may include a selection of a row or column of fluorochromes or detectors, as appropriate. In some such cases, methods include outputting the image value intensity and/or spectral signature associated with each cell of the cell selection, e.g., in a table or any other suitable format. In addition or alternatively, methods may include outputting a highlighted row or column of the grid corresponding to the cell selection. Such highlighting can in some embodiments include enlarging the row or column associated with the cell selection or otherwise altering the depiction of said row or column relative to neighboring rows and columns in such a manner that a user may clearly inspect its constituent image values. In further embodiments, methods include outputting a pop-up display of a histogram of representative cytometry intensity data for that fluorochrome in that detector, using previously recorded data from a reference library. In an embodiment where one or more rows corresponding to fluorochromes are selected, a pop-up display with a line or bar chart of spectral signature values for the selected fluorochrome(s) can be outputted. In some such embodiments, detectors can be listed on the horizontal axis (e.g., x-axis) with spectral signature values listed on the vertical axis (e.g., y-axis). In some such embodiments, the resulting output may resemble **FIG. 1****,** but with one colored line or set of bars per selected fluorochrome. In an instance where one or more columns corresponding to detectors are selected, a pop-up display with a line or bar chart of spectral signature values for the selected detector(s) may be outputted. In some such instances, fluorochromes can be represented on the horizontal axis (e.g., x-axis) and spectral signature values can be represented on the vertical axis (e.g., y-axis). For example, the resulting output may resemble **FIG. 1** but with fluorochromes on the x-axis instead of detectors, and with one colored line or set of bars per selected detector.

A cell selection may be made via any suitable means. In some cases, the cell selection is received/input using a graphical user interface (GUI). In some cases, the GUI is comprised of drop-down menus. In further cases, the cell selection is provided by inputting information into appropriate text fields. In still further cases, the cell selection is provided by selecting check boxes. In yet further cases, the GUI is configured receive the cell selection via a combination of methods. In other embodiments, the cell selection is provided when a user interacts with the populated grid, e.g., by "mousing-over" or "clicking" particular cells within the grid. In embodiments where the populated grid is provided on a touchscreen, e.g., on a tablet or smartphone, the user may interact with the populated grid by tapping the touchscreen. Where it is desirable to make a cell selection of one or more columns or rows, said columns or rows may be selected by selecting the appropriate fluorochrome or detector identifier on the first or second axis, as appropriate. Alternatively, in some embodiments, a user may "click-and-drag" over a plurality of cells within a given column or row to select said column or row.

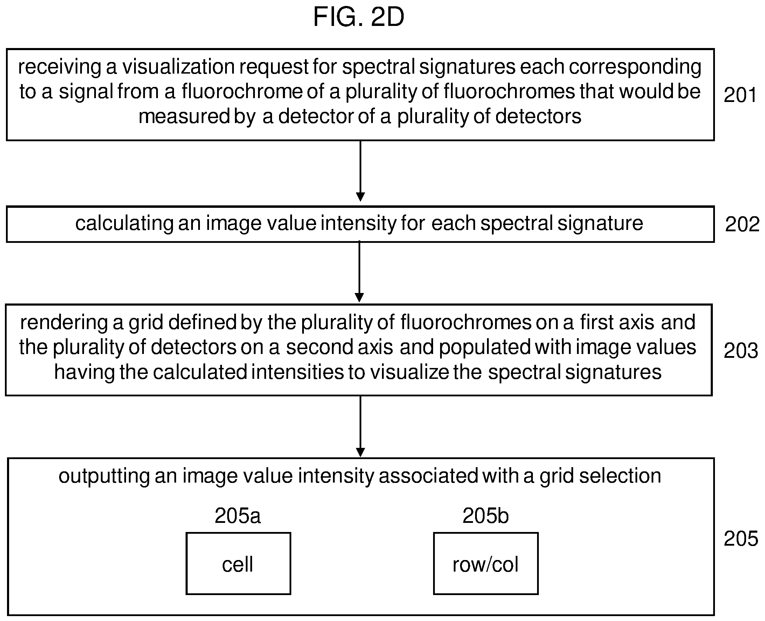

**FIG. 2D** presents a flowchart for practicing a method according to one embodiment of the disclosure. **FIG. 2D** includes the same steps as **FIG. 2A** with the addition of outputting an image value intensity associated with a cell selection in step 205. This can include receiving a cell selection from a user indicating a fluorochrome and detector of interest and outputting the image value intensity associated with the cell selection (205a). Alternatively, the cell selection can include a selection of a row or column of fluorochromes or detectors, and the method includes outputting a highlighted row or column of the grid corresponding to the cell selection (205b). Although this is not shown, step 202 of **FIG. 2D** may or may not involve the normalizing shown in **FIG. 2B** and the method of **FIG. 2D** may or may not involve the scaling shown in **FIG. 2C****.**

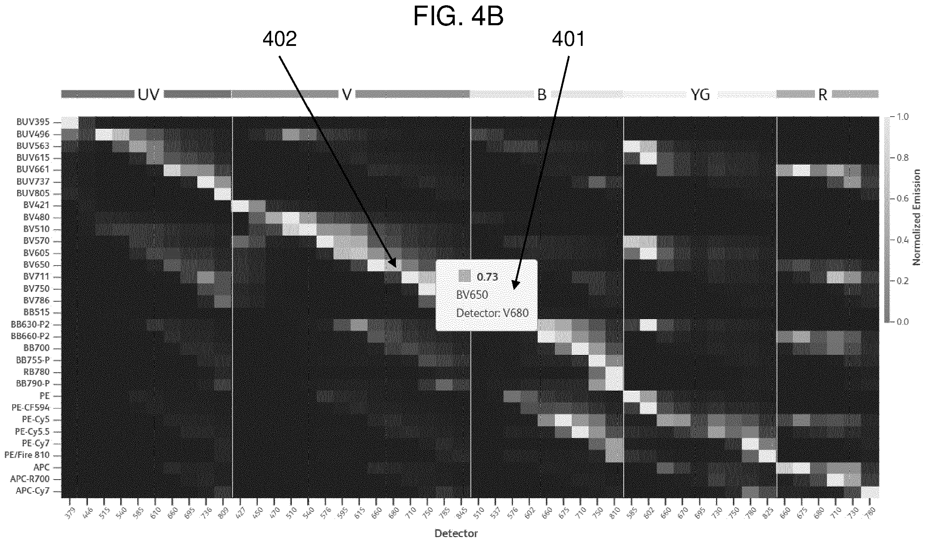

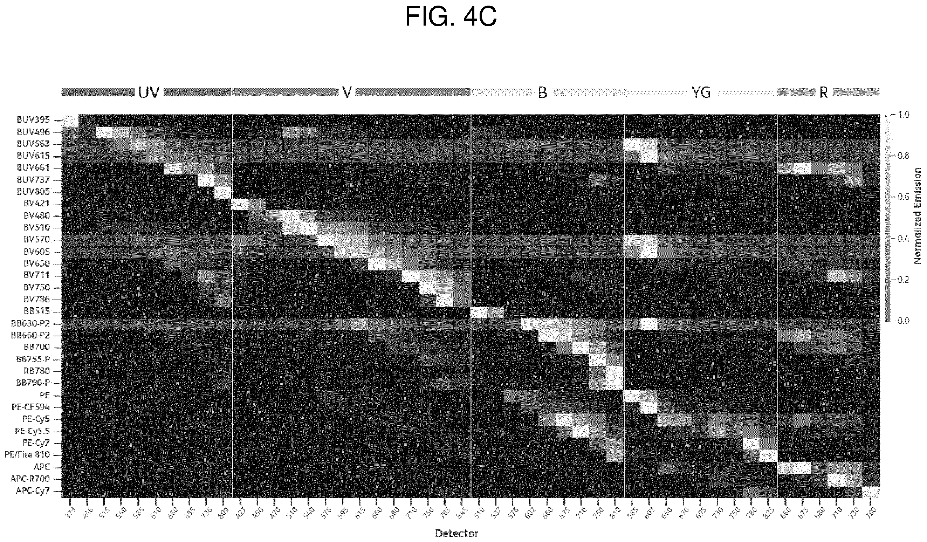

**FIG. 4B** depicts outputting an image value intensity associated with a cell selection. **FIG. 4B** depicts the heatmap described above with respect to **FIG. 4A****,** with the addition of outputting results from a cell selection. In the example of **FIG. 4B****,** the cell selection corresponds to the fluorochrome BV650 and the detector V680. "V" corresponds to the segment of the electromagnetic spectrum from which the detector is configured to collect light (in this case the violet portion of the visible spectrum), while "680" corresponds to the wavelength of light collected. Box 401 outputted to the user includes the image value intensity as well as the relevant detector and fluorochrome identifiers. The cell corresponding to the cell selection is also highlighted (402). **FIG. 4C** depicts outputting an image value intensity associated with a cell selection according to certain embodiments. As shown in **FIG. 4C****,** the cell selection includes image value intensities in the rows corresponding to five different fluorochromes: BU563, BU615, BV570, BV605, and BB630-P2. Image values in those rows are highlighted.

Methods of the disclosure may in some cases be performed in conjunction with a system of the disclosure (e.g., described in greater detail below). Such methods may include inputting into a processor a visualization request for spectral signatures each corresponding to a signal from a fluorochrome of a plurality of fluorochromes that would be measured by a detector of a plurality of detectors, and receiving the populated grid from the processor. As will be described in greater detail below, processors for use in such embodiments of the subject methods have instructions stored thereon, which when executed by the processor, cause the processor to receive the visualization request, calculate an image value intensity for each spectral signature, and render a grid defined by the plurality of fluorochromes on a first axis and the plurality of detectors on a second axis and populated with image values having the calculated intensities to visualize the spectral signatures.

In embodiments, methods of the present disclosure may be employed in conjunction with methods for determining and/or assessing a fluorochrome panel. Such methods are described in, e.g., U.S. Patent Application Nos. 2023/0243735 and 2023/0393049, the disclosures of which are incorporated by reference herein in their entirety. In addition, methods of the present disclosure may be employed in conjunction with methods described in U.S. Patent Application No. 18/226,555; filed on July 26, 2023, the disclosure of which is incorporated by reference herein in its entirety.

In embodiments, the subject fluorochrome panels visualized using the subject methods are employed to analyze a sample. In some instances, the sample analyzed is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen, or the like. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Fluorochromes in the fluorochrome panel may be configured to target different types of cells (e.g., via an antibody targeted to that cell, etc.). A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In certain embodiments, fluorochrome panels identified via the present methods may be employed in a flow cytometric protocol (e.g., to analyze a sample, such as those discussed above). In practicing such methods, a sample (e.g., in a flow stream of a flow cytometer) is irradiated with light from a light source. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, methods of embodiments of the disclosure include irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In other instances, the methods include irradiating the flow stream with a dye laser, such as a stilbene, coumarin or rhodamine laser. In yet other instances, methods include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the flow stream with a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample may be irradiated with one or more of the above mentioned light sources, such as 2 or more light sources, such as 3 or more light sources, such as 4 or more light sources, such as 5 or more light sources and including 10 or more light sources. The light source may include any combination of types of light sources. For example, in some embodiments, the methods include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. In other instances, where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. In other embodiments, the flow stream is sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g., laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where sample is sequentially irradiated with two or more light sources, the duration sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each light source is 10 microseconds. In embodiments where sample is sequentially irradiated by more than two (i.e., 3 or more) light sources, the delay between irradiation by each light source may be the same or different.

The sample may be irradiated continuously or in discrete intervals. In some instances, methods include irradiating the sample in the sample with the light source continuously. In other instances, the sample in is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In embodiments, light from the irradiated sample is conveyed to a light detection system and measured by one or more photodetectors. In practicing the subject methods, light from the sample is conveyed to three or more wavelength separators that are each configured to pass light having a predetermined spectral range. The spectral ranges of light from each of the wavelength separators are conveyed to one or more light detection modules having optical components that are configured to convey light having a predetermined sub-spectral range to the photodetectors.

Light may be measured with the light detection systems continuously or in discrete intervals. In some instances, methods include taking measurements of the light continuously. In other instances, the light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the collected light may be taken one or more times during the subject methods, such as 2 or more times, such as 3 or more times, such as 5 or more times and including 10 or more times. In certain embodiments, the light propagation is measured 2 or more times, with the data in certain instances being averaged.

In some embodiments, methods include adjusting the light before detecting the light with the subject light detection systems. For example, the light from the sample source may be passed through one or more lenses, mirrors, pinholes, slits, gratings, light refractors, and any combination thereof. In some instances, the collected light is passed through one or more focusing lenses, such as to reduce the profile of the light directed to the light detection system or optical collection system as described above. In other instances, the emitted light from the sample is passed through one or more collimators to reduce light beam divergence conveyed to the light detection system.

### SYSTEMS

Aspects of the disclosure also include systems. Systems of interest include memory operably coupled to a processor. The memory comprises instructions stored thereon, which when executed by the processor, cause the processor to carry out methods of the disclosure, e.g., as described above. For example, the subject processor in conjunction with the memory are configured to receive a visualization request for spectral signatures each corresponding to a signal from a fluorochrome of a plurality of fluorochromes that would be measured by a detector of a plurality of detectors, calculate an image value intensity for each spectral signature, and render a grid defined by the plurality of fluorochromes on a first axis and the plurality of detectors on a second axis and populated with image values having the calculated intensities to visualize the spectral signatures.

The term "memory" is used herein in its conventional sense to refer to a device that stores information for subsequent retrieval by a processor, and may include magnetic or optical devices, or solid state memory devices. Examples include any commonly available random access memory (RAM), magnetic media such as a resident hard disk or tape, optical media such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. A memory or memory unit may have more than one physical memory device of the same or different types (for example, a memory may have multiple memory devices such as multiple hard drives or multiple solid state memory devices or some combination of hard drives and solid state memory devices). The memory may be a computer readable medium or permanent memory. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

In some embodiments, a computer program product is described comprising a computer usable medium having control logic (computer software program, including program code) stored therein. The control logic, when executed by the processor, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

The subject programmable logic may be implemented in any of a variety of devices such as specifically programmed event processing computers, wireless communication devices, integrated circuit devices, or the like. In some embodiments, the programable logic may be executed by a specifically programmed processor, which may include one or more processors, such as one or more digital signal processors (DSPs), configurable microprocessors, application specific integrated circuits (ASICs), field programmable gate arrays (FPGAs), or other equivalent integrated or discrete logic circuitry. A combination of computing devices, e.g., a combination of a DSP and a microprocessor, a plurality of microprocessors, one or more microprocessors in conjunction with a DSP core, or any other such configuration in at least partial data connectivity may implement one or more of the features described herein.

In some embodiments, the processor includes a commercially available processor such as a processor made by Intel Corporation, or it may be one of other processors that are or will become available. The processor executes the operating system, which may be, for example, a WINDOWS^{®}-type operating system from the Microsoft Corporation; a Unix^{®} or Linux-type operating system or a future operating system; or some combination thereof. The operating system interfaces with firmware and hardware in a well-known manner, and facilitates the processor in coordinating and executing the functions of various computer programs that may be written in a variety of programming languages, such as Java, Perl, C++, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Systems according to some embodiments also include an output controller. Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

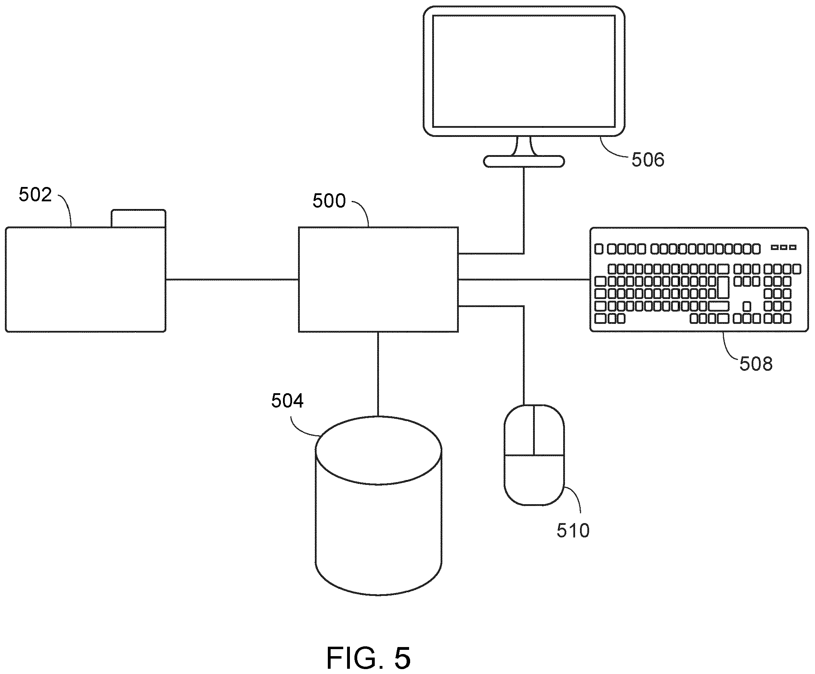

**FIG. 5** shows a functional block diagram for one example of a system for visualizing spectral signatures according to certain embodiments. As shown in **FIG. 5****,** a processor 500 can be configured to implement a variety of processes for visualizing spectral signatures by receiving a visualization request for spectral signatures each corresponding to a signal from a fluorochrome of a plurality of fluorochromes that would be measured by a detector of a plurality of detectors, calculating an image value intensity for each spectral signature, and rendering a grid defined by the plurality of fluorochromes on a first axis and the plurality of detectors on a second axis and populated with image values having the calculated intensities to visualize the spectral signatures.

An optional flow cytometer or sorting system 502 can be configured to acquire biological event data. For example, a flow cytometer can generate flow cytometric event data (e.g., particle-modulated light data). The flow cytometer 502 can be configured to provide biological event data to the processor 500. A data communication channel can be included between the flow cytometer 502 and the processor 500. The biological event data can be provided to the processor 200 via the data communication channel.

The processor 500 can be configured to receive a visualization request from a user via a first input device. For example, the first input device can be implemented as a mouse 510. The mouse 510 can initiate a visualization request using the processor 500 by identifying fluorochromes and detectors via the display device 506 (e.g., by clicking identifiers on drop-down menus, check boxes, etc.). In some implementations, the first device can be implemented as the keyboard 508 or other means for providing the visualization request to the processor 500 such as a touchscreen, a stylus, an optical detector, or a voice recognition system. Some input devices can include multiple inputting functions. In such implementations, the inputting functions can each be considered an input device. For example, as shown in **FIG. 5****,** the mouse 510 can include a right mouse button and a left mouse button, each of which can generate a triggering event. The triggering event can cause the processor 500 to alter the manner in which the data is displayed, which portions of the data is actually displayed on the display device 506. Any of the input devices, e.g., keyboard 508 and mouse 510 can also be used to provide a cell selection.

The processor 500 can be connected to a storage device (e.g., memory) 504. The storage device 504 can be configured to receive and store biological event data from the processor 500. The storage device 504 can also be configured to receive and store flow cytometric event data from the processor 500. The storage device 504 can be further configured to allow retrieval of biological event data, such as flow cytometric event data, fluorochrome data, and detector data, by the processor 500. Storage device 504 can also store instructions thereon that can be recalled by the processor 500 for executing methods of the invention.

The display device 506 can be configured to receive display data from the processor 500. The display data can comprise grids (e.g., heatmaps) produced as described above. The display device 506 can be further configured to alter the information presented according to input received from the processor 500 in conjunction with input from the flow cytometer 502, the storage device 504, the keyboard 508, and/or the mouse 510.

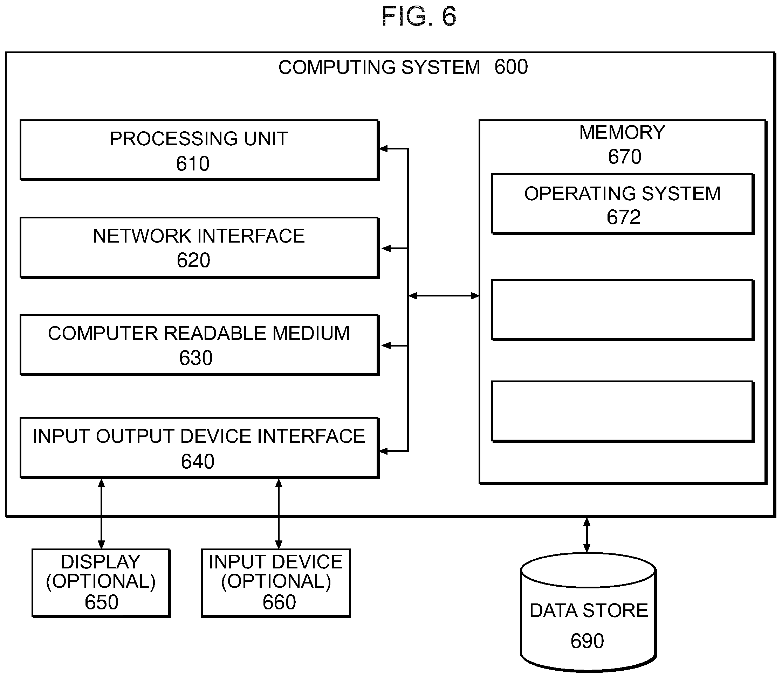

**FIG. 6** depicts a general architecture of an example computing device 600 according to certain embodiments. The general architecture of the computing device 600 depicted in **FIG. 6** includes an arrangement of computer hardware and software components. It is not necessary, however, that all of these generally conventional elements be shown in order to provide an enabling disclosure. As illustrated, the computing device 600 includes a processing unit 610, a network interface 620, a computer readable medium drive 630, an input/output device interface 640, a display 650, and an input device 660, all of which may communicate with one another by way of a communication bus. The network interface 620 may provide connectivity to one or more networks or computing systems. The processing unit 610 may thus receive information and instructions from other computing systems or services via a network. The processing unit 610 may also communicate to and from memory 670 and further provide output information for an optional display 650 via the input/output device interface 640. For example, an analysis software (e.g., data analysis software or program such as FlowJo^{®}) stored as executable instructions in the non-transitory memory of the analysis system can display the flow cytometry event data to a user. The input/output device interface 640 may also accept input from the optional input device 660, such as a keyboard, mouse, digital pen, microphone, touch screen, gesture recognition system, voice recognition system, gamepad, accelerometer, gyroscope, or other input device.

The memory 670 may contain computer program instructions (grouped as modules or components in some embodiments) that the processing unit 610 executes in order to implement one or more embodiments. The memory 670 generally includes RAM, ROM and/or other persistent, auxiliary or non-transitory computer-readable media. The memory 670 may store an operating system 672 that provides computer program instructions for use by the processing unit 610 in the general administration and operation of the computing device 600. Data may be stored in data storage device 690. The memory 670 may further include computer program instructions and other information for implementing aspects of the present disclosure.

In certain instances, the system is or includes a particle analyzer. Particle analyzers of interest may include a flow cell for transporting particles in a flow stream, a light source for irradiating the particles in the flow stream at an interrogation point, and a particle-modulated light detector for detecting particle-modulated light. In certain embodiments, the particle analyzer is a flow cytometer. In some cases where the particle analyzer is a flow cytometer, said flow cytometer is a full spectrum flow cytometer.

As discussed herein, a "flow cell" is described in its conventional sense to refer to a component, such as a cuvette, containing a flow channel having a liquid flow stream for transporting particles in a sheath fluid. Cuvettes of interest include containers having a passage running therethrough. The flow stream may include a liquid sample injected from a sample tube. Flow cells of interest include a light-accessible flow channel. In some instances, the flow cell includes transparent material (e.g., quartz) that permits the passage of light therethrough. In some embodiments, the flow cell is a stream-in-air flow cell in which light interrogation of the particles occurs outside of the flow cell (i.e., in free space).

In some cases, the flow stream is configured for irradiation with light from a light source at an interrogation point. The flow stream for which the flow channel is configured may include a liquid sample injected from a sample tube. In certain embodiments, the flow stream may include a narrow, rapidly flowing stream of liquid that is arranged such that linearly segregated particles transported therein are separated from each other in a single-file manner. The "interrogation point" discussed herein refers to a region within the flow cell in which the particle is irradiated by light from the light source, e.g., for analysis. The size of the interrogation point may vary as desired. For example, where 0 µm represents the axis of light emitted by the light source, the interrogation point may range from -100 µm to 100 µm, such as -50 µm to 50 µm, such as -25 µm to 40 µm, and including -15 µm to 30 µm.

After particles are irradiated in the flow cell, particle-modulated light may be observed. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. In additional embodiments, the particle-modulated light includes forward-scattered light (i.e., light that travels through or around the particle in mostly a forward direction). In still other cases, the particle-modulated light includes fluorescent light (i.e., light emitted from a fluorochrome following irradiation with excitation wavelength light).

As discussed above, aspects of flow cytometers also include a light source configured to irradiate particles passing through the flow cell at an interrogation point. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

Where the optical adjustment component is configured to move, the optical adjustment component may be configured to be moved continuously or in discrete intervals, such as for example in 0.01 µm□or greater increments, such as 0.05 µm□or greater, such as 0.1 µm□or greater, such as 0.5 µm or greater such as 1 µm□or greater, such as 10 µm□or greater, such as 100 µm□or greater, such as 500 µm□or greater, such as 1 mm or greater, such as 5 mm or greater, such as 10 mm or greater and including 25 mm or greater increments.

Any displacement protocol may be employed to move the optical adjustment component structures, such as coupled to a moveable support stage or directly with a motor actuated translation stage, leadscrew translation assembly, geared translation device, such as those employing a stepper motor, servo motor, brushless electric motor, brushed DC motor, micro-step drive motor, high resolution stepper motor, among other types of motors.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

As discussed above, particle analyzers of interest may further include one or more particle-modulated light detectors for detecting particle-modulated light intensity data. In some embodiments, the particle-modulated light detector(s) include one or more forward-scattered light detectors configured to detect forward-scattered light. For example, the subject particle analyzers may include 1 forward-scattered light detector or multiple forward-scattered light detectors, such as 2 or more, such as 3 or more, such as 4 or more, and including 5 or more. In certain embodiments, particle analyzers include 1 forward-scattered light detector. In other embodiments, particle analyzers include 2 forward-scattered light detectors.

Any convenient detector for detecting collected light may be used in the forward-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the forward-scattered light detector is configured to measure light continuously or in discrete intervals. In some instances, detectors of interest are configured to take measurements of the collected light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In additional embodiments, the one or more particle-modulated light detector(s) may include one or more side-scattered light detectors for detecting side-scatter wavelengths of light (i.e., light refracted and reflected from the surfaces and internal structures of the particle). In some embodiments, particle analyzers include a single side-scattered light detector. In other embodiments, particle analyzers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject particle analyzers also include a fluorescent light detector configured to detect one or more fluorescent wavelengths of light. In other embodiments, particle analyzers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject particle analyzers include multiple fluorescent light detectors, each fluorescent light detector may be the same, or the collection of fluorescent light detectors may be a combination of different types of detectors. For example, where the subject particle analyzers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the particle analyzers as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, particle analyzers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, particle analyzers may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

In some embodiments, particle analyzers include one or more wavelength separators positioned between the flow cell and the particle-modulated light detector(s). The term "wavelength separator" is used herein in its conventional sense to refer to an optical component that is configured to separate light collected from the sample into predetermined spectral ranges. In some embodiments, particle analyzers include a single wavelength separator. In other embodiments, particle analyzers include a plurality of wavelength separators, such as 2 or more wavelength separators, such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more wavelength separators. In some embodiments, the wavelength separator is configured to separate light collected from the sample into predetermined spectral ranges by passing light having a predetermined spectral range and reflecting one or more remaining spectral ranges of light. In other embodiments, the wavelength separator is configured to separate light collected from the sample into predetermined spectral ranges by passing light having a predetermined spectral range and absorbing one or more remaining spectral ranges of light. In yet other embodiments, the wavelength separator is configured to spatially diffract light collected from the sample into predetermined spectral ranges. Each wavelength separator may be any convenient light separation protocol, such as one or more dichroic mirrors, bandpass filters, diffraction gratings, beam splitters or prisms. In some embodiments, the wavelength separator is a prism. In other embodiments, the wavelength separator is a diffraction grating. In certain embodiments, wavelength separators in the subject light detection systems are dichroic mirrors.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In certain instances, flow cytometry systems of the disclosure are configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894 the disclosures of which are herein incorporated by reference.

### NON-TRANSITORY COMPUTER-READABLE STORAGE MEDIA

Aspects of the present disclosure further include non-transitory computer readable storage media having instructions for practicing the subject methods. Computer readable storage mediums may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, flash drive, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Java, Python, Visual Basic, and C++, as well as many others.

Non-transitory computer readable storage media of the disclosure have instructions stored thereon for visualizing spectral signatures by a method of the present disclosure (e.g., described in detail above). In other words, the non-transitory computer readable storage media are configured to receive a visualization request for spectral signatures each corresponding to a signal from a fluorochrome of a plurality of fluorochromes that would be measured by a detector of a plurality of detectors, calculate an image value intensity for each spectral signature, and render a grid defined by the plurality of fluorochromes on a first axis and the plurality of detectors on a second axis and populated with image values having the calculated intensities to visualize the spectral signatures.

### UTILITY

Methods, systems, and computer readable media of the present disclosure may find use where it is desirable to represent spectral signatures in a compact, easy-to-read fashion. In particular, aspects of the disclosure may be used to indicate areas of spectral overlap between fluorochromes, e.g., by comparing the intensity of heatmap cells in a column corresponding to one detector. Methods, systems and computer readable media of the disclosure may also be used to indicate the spectral shape of a fluorochrome's emission and excitation thereby revealing meaningful features such as unexpected cross-laser excitation, e.g., by examining a row corresponding to a fluorochrome. Furthermore, aspects of the present disclosure may be employed to determine usable sets of fluorochromes for particle analysis (e.g., flow cytometry). In some instances, methods, systems and computer readable media described herein aid in the determination of which set(s) of fluorochromes are likely to provide the best quality data (e.g., maximum biological resolution).

Embodiments of the disclosure find use in applications where cells prepared from a biological sample may be desired for research, laboratory testing or for use in therapy. In some embodiments, the subject methods and devices may facilitate obtaining individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy. Methods and devices of the present disclosure allow for separating and collecting cells from a biological sample (e.g., organ, tissue, tissue fragment, fluid) with enhanced efficiency and low cost as compared to traditional flow cytometry systems.

### KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for visualizing spectral signatures. In embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo^{®}).

In addition to the above components, the subject kits may further include (in some embodiments) instructions, e.g., for installing the plugin to the existing software package. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

Notwithstanding the appended claims, the present disclosure may also be defined by the following clauses:
1. A computer-implemented method of visualizing spectral signatures, the method comprising, via a processor:
   receiving a visualization request for spectral signatures each corresponding to a signal from a fluorochrome of a plurality of fluorochromes that could be measured by a detector of a plurality of detectors;
   calculating an image value intensity for each spectral signature; and
   rendering a grid defined by the plurality of fluorochromes on a first axis and the plurality of detectors on a second axis and populated with image values having the calculated intensities to visualize the spectral signatures.
2. The computer-implemented method according to Clause 1, wherein the grid is a heatmap.
3. The computer-implemented method according to Clause 1 or 2, wherein calculating the image value intensities comprises normalizing the spectral signatures.
4. The computer-implemented method according to Clause 3, wherein calculating the image value intensities comprises normalizing the spectral signatures to a range.
5. The computer-implemented method according to Clause 4, wherein calculating the image value intensities comprises normalizing the spectral signatures to a range of [0,1].
6. The computer-implemented method according to Clause 3, wherein calculating the image value intensities comprises normalizing the spectral signatures to a sum of the spectral signatures associated with each fluorochrome.
7. The computer-implemented method according to Clause 3, wherein calculating the image value intensities comprises normalizing the spectral signatures to a two-norm of the spectral signatures associated with each fluorochrome.
8. The computer-implemented method according to Clause 1 or 2, wherein calculating the image value intensities does not comprise normalizing the spectral signatures.
9. The computer-implemented method according to any one of the preceding clauses, further comprising scaling the image value intensities of the populated grid.
10. The computer-implemented method according to Clause 9, wherein scaling the image value intensities of the populated grid comprises linearly scaling the image value intensities of the populated grid.
11. The computer-implemented method according to Clause 9, wherein scaling the spectral signatures of the populated grid comprises logarithmically scaling the image value intensities of the populated grid.
12. The computer-implemented method according to any one of the preceding clauses, wherein the image value intensities are color image value intensities.
13. The computer-implemented method according to Clause 12, wherein the color image value intensities are red-blue-green (RGB) color image value intensities.
14. The computer-implemented method according to any one of the preceding clauses, further comprising receiving a cell selection from a user indicating a fluorochrome and detector of interest.
15. The computer-implemented method according to Clause 14, further comprising outputting the image value intensity associated with the cell selection.
16. The computer-implemented method according to Clause 14, wherein the cell selection comprises a selection of a plurality of cells.
17. The computer-implemented method according to Clause 16, wherein the cell selection comprises a row or column associated with a fluorochrome of the plurality.
18. The computer-implemented method according to Clause 16, wherein the cell selection comprises a row or column associated with a detector of the plurality.
19. The computer-implemented method according to any one of Clauses 14 to 18, further comprising outputting highlighted cells corresponding to the cell selection.
20. The computer-implemented method according to any one of the preceding clauses, further comprising receiving an instrument identifier.
21. The computer-implemented method according to Clause 20, wherein the detectors of the plurality are associated with the instrument identifier.
22. The computer-implemented method according to any one of the preceding clauses, wherein the first axis is a vertical axis and the second axis is a horizontal axis.
23. A system comprising memory operably coupled to a processor, wherein the memory comprises instructions stored thereon, which when executed by the processor, cause the processor to:
   receive a visualization request for spectral signatures each corresponding to a signal from a fluorochrome of a plurality of fluorochromes that could be measured by a detector of a plurality of detectors;
   calculate an image value intensity for each spectral signature; and
   render a grid defined by the plurality of fluorochromes on a first axis and the plurality of detectors on a second axis and populated with image values having the calculated intensities to visualize the spectral signatures.
24. The system according to Clause 23, wherein the grid is a heatmap.
25. The system according to Clause 23 or 24, wherein calculating the image value intensities comprises normalizing the spectral signatures.
26. The system according to Clause 25, wherein calculating the image value intensities comprises normalizing the spectral signatures to a range.
27. The system according to Clause 26, wherein calculating the image value intensities comprises normalizing the spectral signatures to a range of [0,1].
28. The system according to Clause 25, wherein calculating the image value intensities comprises normalizing the spectral signatures to a sum of the spectral signatures associated with each fluorochrome.
29. The system according to Clause 25, wherein calculating the image value intensities comprises normalizing the spectral signatures to a two-norm of the spectral signatures associated with each fluorochrome.
30. The system according to Clause 23 or 24, wherein calculating the image value intensities does not comprise normalizing the spectral signatures.
31. The system according to any one of Clauses 23 to 30, wherein the processor is configured to scale the image value intensities of the populated grid.
32. The system according to Clause 31, wherein scaling the spectral signatures of the populated grid comprises linearly scaling the image value intensities of the populated grid.
33. The system according to Clause 31, wherein scaling the spectral signatures of the populated grid comprises logarithmically scaling the image value intensities of the populated grid.
34. The system according to any one of Clauses 23 to 33, wherein the image value intensities are color image value intensities.
35. The system according to Clause 34, wherein the color image value intensities are red-blue-green (RGB) color image value intensities.
36. The system according to any one of Clauses 23 to 35, wherein the processor is configured to receive a cell selection from a user indicating a fluorochrome and detector of interest.
37. The system according to Clause 36, wherein the processor is configured to output the image value intensity associated with the cell selection.
38. The system according to Clause 36, wherein the cell selection comprises a selection of a plurality of cells.
39. The system according to Clause 38, wherein the cell selection comprises a row or column associated with a fluorochrome of the plurality.
40. The system according to Clause 38, wherein the cell selection comprises a row or column associated with a detector of the plurality.
41. The system according to any one of Clauses 36 to 40, wherein the processor is configured to output highlighted cells corresponding to the cell selection.
42. The system according to any one of Clauses 23 to 41, further comprising a display operably connected to the processor and configured to depict the populated grid.
43. The system according to any one of Clauses 23 to 42, wherein the processor is configured to receive an instrument identifier.
44. The system according to Clause 43, wherein the detectors of the plurality are associated with the instrument identifier.
45. The system according to any one of Clauses 23 to 44, wherein the first axis is a vertical axis and the second axis is a horizontal axis.
46. A non-transitory computer-readable storage medium comprising instructions stored thereon for visualizing spectral signatures by a method comprising:
   receiving a visualization request for spectral signatures each corresponding to a signal from a fluorochrome of a plurality of fluorochromes that could be measured by a detector of a plurality of detectors;
   calculating an image value intensity for each spectral signature; and
   rendering a grid defined by the plurality of fluorochromes on a first axis and the plurality of detectors on a second axis and populated with image values having the calculated intensities to visualize the spectral signatures.
47. The non-transitory computer-readable storage medium according to Clause 46, wherein the grid is a heatmap.
48. The non-transitory computer-readable storage medium according to Clause 46 or 47, wherein calculating the image value intensities further comprises normalizing the spectral signatures.
49. The non-transitory computer-readable storage medium according to Clause 48, wherein calculating the image value intensities comprises normalizing the spectral signatures to a range.
50. The non-transitory computer-readable storage medium according to Clause 49, wherein calculating the image value intensities comprises normalizing the spectral signatures to a range of [0,1].
51. The non-transitory computer-readable storage medium according to Clause 48, wherein calculating the image value intensities comprises normalizing the spectral signatures to a sum of the spectral signatures associated with each fluorochrome.
52. The non-transitory computer-readable storage medium according to Clause 48, wherein calculating the image value intensities comprises normalizing the spectral signatures to a two-norm of the spectral signatures associated with each fluorochrome.
53. The non-transitory computer-readable storage medium according to Clause 46 or 47, wherein calculating the image value intensities does not comprise normalizing the spectral signatures.
54. The non-transitory computer-readable storage medium according to any one of Clauses 46 to 53, wherein the method further comprises scaling the image value intensities of the populated grid.
55. The non-transitory computer-readable storage medium according to Clause 54, wherein scaling the image value intensities of the populated grid comprises linearly scaling the image value intensities of the populated grid.
56. The non-transitory computer-readable storage medium according to Clause 54, wherein scaling the image value intensities of the populated grid comprises logarithmically scaling the image value intensities of the spectral signatures of the populated grid.
57. The non-transitory computer-readable storage medium according to any one of Clauses 46 to 56, wherein the image value intensities are color image value intensities.
58. The non-transitory computer-readable storage medium according to Clause 57, wherein the color image value intensities are red-blue-green (RGB) color image value intensities.
59. The non-transitory computer-readable storage medium according to any one of Clauses 46 to 58, wherein the method further comprises receiving a cell selection from a user indicating a fluorochrome and detector of interest.
60. The non-transitory computer-readable storage medium according to Clause 59, wherein the method further comprises outputting the image value intensity associated with the cell selection.
61. The non-transitory computer-readable storage medium according to Clause 59, wherein the cell selection comprises a selection of a plurality of cells.
62. The non-transitory computer-readable storage medium according to Clause 61, wherein the cell selection comprises a row or column associated with a fluorochrome of the plurality.
63. The non-transitory computer-readable storage medium according to Clause 61, wherein the cell selection comprises a row or column associated with a detector of the plurality.
64. The non-transitory computer-readable storage medium according to any one of Clauses 59 to 63, wherein the method further comprises outputting cells corresponding to the cell selection.
65. The non-transitory computer-readable storage medium according to any one of Clauses 46 to 64, wherein the method further comprises receiving an instrument identifier.
66. The non-transitory computer-readable storage medium according to Clause 65, wherein the detectors of the plurality are associated with the instrument identifier.
67. The non-transitory computer-readable storage medium according to any one of Clauses 46 to 66, wherein the first axis is a vertical axis and the second axis is a horizontal axis.
68. A method of visualizing spectral signatures, the method comprising:
   (a) inputting into a processor a visualization request for spectral signatures each corresponding to a signal from a fluorochrome of a plurality of fluorochromes that could be measured by a detector of a plurality of detectors, wherein the processor comprises instructions stored thereon, which when executed by the processor, cause the processor to:
      receive the visualization request;
      calculate an image value intensity for each spectral signature; and
      render a grid defined by the plurality of fluorochromes on a first axis and the plurality of detectors on a second axis and populated with image values having the calculated intensities to visualize the spectral signatures; and
   (b) receiving the populated grid from the processor.
69. The method according to Clause 68, wherein the grid is a heatmap.
70. The method according to Clause 68 or 69, wherein calculating the image value intensities comprises normalizing the spectral signatures.
71. The method according to Clause 70, wherein calculating the image value intensities comprises normalizing the spectral signatures to a range.
72. The method according to Clause 71, wherein calculating the image value intensities comprises normalizing the spectral signatures to a range of [0,1].
73. The method according to Clause 70, wherein calculating the image value intensities comprises normalizing the spectral signatures to a sum of the spectral signatures associated with each fluorochrome.
74. The method according to Clause 70, wherein calculating the image value intensities comprises normalizing the spectral signatures to a two-norm of the spectral signatures associated with each fluorochrome.
75. The method according to Clause 68 or 69, wherein calculating the image value intensities does not comprise normalizing the spectral signatures.
76. The method according to any one of Clauses 68 to 75, wherein the processor is configured to scale the image value intensities of the populated grid.
77. The method according to Clause 76, wherein scaling the image value intensities of the populated grid comprises linearly scaling the image value intensities of the populated grid.
78. The method according to Clause 76, wherein scaling the image value intensities of the populated grid comprises logarithmically scaling the image value intensities of the populated grid.
79. The method according to any one of Clauses 68 to 78, wherein the image value intensities are color image value intensities.
80. The method according to Clause 79, wherein the color image value intensities are red-blue-green (RGB) color image value intensities.
81. The method according to any one of Clauses 68 to 80, further comprising inputting into the processor a cell selection indicating a fluorochrome and detector of interest.
82. The method according to Clause 81, further comprising receiving from the processor the image value intensity associated with the cell selection.
83. The method according to Clause 81, wherein the cell selection comprises a selection of a plurality of cells.
84. The method according to Clause 83, wherein the cell selection comprises a row or column associated with a fluorochrome of the plurality.
85. The method according to Clause 83, wherein the cell selection comprises a row or column associated with a detector of the plurality.
86. The method according to any one of Clauses 81 to 85, further comprising receiving from the processor a highlighted row or column of the grid corresponding to the cell selection.
87. The method according to any one of Clauses 68 to 86, wherein the method comprises receiving the populated grid on a display operably connected to the processor.
88. The method according to any one of Clauses 68 to 87, further comprising inputting an instrument identifier into the processor.
89. The method according to Clause 88, wherein the detectors of the plurality are associated with the instrument identifier.
90. The method according to any one of Clauses 68 to 89, wherein the first axis is a vertical axis and the second axis is a horizontal axis.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A computer-implemented method of visualizing spectral signatures, the method comprising, via a processor:
receiving a visualization request for spectral signatures each corresponding to a signal from a fluorochrome of a plurality of fluorochromes that could be measured by a detector of a plurality of detectors;
calculating an image value intensity for each spectral signature; and
rendering a grid defined by the plurality of fluorochromes on a first axis and the plurality of detectors on a second axis and populated with image values having the calculated intensities to visualize the spectral signatures.

2. The computer-implemented method according to Claim 1, wherein the grid is a heatmap.

3. The computer-implemented method according to Claim 1 or 2, wherein calculating the image value intensities comprises normalizing the spectral signatures.

4. The computer-implemented method according to Claim 3, wherein calculating the image value intensities comprises normalizing the spectral signatures to a range, a sum of the spectral signatures associated with each fluorochrome, or a two-norm of the spectral signatures associated with each fluorochrome.

5. The computer-implemented method according to Claim 1 or 2, wherein calculating the image value intensities does not comprise normalizing the spectral signatures.

6. The computer-implemented method according to any one of the preceding claims, further comprising scaling the image value intensities of the populated grid.

7. The computer-implemented method according to Claim 6, wherein scaling the image value intensities of the populated grid comprises linearly or logarithmically scaling the image value intensities of the populated grid.

8. The computer-implemented method according to any one of the preceding claims, wherein the image value intensities are color image value intensities.

9. The computer-implemented method according to any one of the preceding claims, further comprising receiving a cell selection from a user indicating a fluorochrome and detector of interest.

10. The computer-implemented method according to Claim 9, further comprising outputting the image value intensity associated with the cell selection.

11. The computer-implemented method according to Claim 9, wherein the cell selection comprises a selection of a plurality of cells.

12. The computer-implemented method according to any one of Claims 9 to 11, further comprising outputting highlighted cells corresponding to the cell selection.

13. The computer-implemented method according to any one of the preceding claims, further comprising receiving an instrument identifier, wherein the detectors of the plurality are associated with the instrument identifier.

14. A system comprising memory operably coupled to a processor, wherein the memory comprises instructions stored thereon, which when executed by the processor, cause the processor to:
receive a visualization request for spectral signatures each corresponding to a signal from a fluorochrome of a plurality of fluorochromes that could be measured by a detector of a plurality of detectors;
calculate an image value intensity for each spectral signature; and
render a grid defined by the plurality of fluorochromes on a first axis and the plurality of detectors on a second axis and populated with image values having the calculated intensities to visualize the spectral signatures.

15. A non-transitory computer-readable storage medium comprising instructions stored thereon for visualizing spectral signatures by a method comprising:
receiving a visualization request for spectral signatures each corresponding to a signal from a fluorochrome of a plurality of fluorochromes that could be measured by a detector of a plurality of detectors;
calculating an image value intensity for each spectral signature; and
rendering a grid defined by the plurality of fluorochromes on a first axis and the plurality of detectors on a second axis and populated with image values having the calculated intensities to visualize the spectral signatures.
